(19) Europäisches Patentamt / European Patent Office / Office européen des brevets

(11) EP 2 786 378 B1

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(21) Anmeldenummer: **12790563.6**

(22) Anmeldetag: **26.11.2012**

(51) Int Cl.:
***G11B 7/24*** *(2013.01)* ***G11B 7/254*** *(2013.01)*
***G11B 7/2542*** *(2013.01)*

(86) Internationale Anmeldenummer:
**PCT/EP2012/073551**

(87) Internationale Veröffentlichungsnummer:
**WO 2013/079422 (06.06.2013 Gazette 2013/23)**

(54) **HOLOGRAFISCHES MEDIUM MIT SCHUTZSCHICHT**

HOLOGRAPHIC MEDIUM WITH PROTECTIVE COATING

SUPPOT HOLOGRAPHIQUE DOTÉ D'UNE COUCHE DE PROTECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2011 EP 11191190**

(43) Veröffentlichungstag der Anmeldung:
**08.10.2014 Patentblatt 2014/41**

(73) Patentinhaber: **Covestro Deutschland AG**
**51373 Leverkusen (DE)**

(72) Erfinder:
- **WEISER, Marc-Stephan**
  **51377 Leverkusen (DE)**
- **HENTSCHEL, Daniel**
  **51109 Köln (DE)**
- **PETZOLDT, Joachim**
  **40789 Monheim (DE)**
- **NAZARAN, Pantea**
  **51061 Köln (DE)**
- **DÖRR, Sebastian**
  **40593 Düsseldorf (DE)**
- **DIJKSTRA, Dirk**
  **50858 Köln (DE)**
- **FLEMM, Ute**
  **42697 Solingen (DE)**
- **HÖNEL, Dennis**
  **53909 Zülpich-Wichterich (DE)**
- **BRUDER, Friedrich-Karl**
  **47802 Krefeld (DE)**
- **FÄCKE, Thomas**
  **51375 Leverkusen (DE)**
- **RÖLLE, Thomas**
  **51381 Leverkusen (DE)**

(74) Vertreter: **Levpat**
**c/o Covestro AG**
**Gebäude 4825**
**51365 Leverkusen (DE)**

(56) Entgegenhaltungen:
**EP-A2- 1 981 027** **EP-A2- 1 995 648**
**WO-A1-2011/067057** **US-A1- 2006 019 172**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 786 378 B1

## Beschreibung

Diese Erfindung betrifft ein holografisches Medium umfassend eine Schutzschicht und einen mit der Schutzschicht verbundenen Photopolymerfilm, der Polyurethan-Matrixpolymere, Acrylat-Schreibmonomere und Photoinitiatoren enthält. Weitere Gegenstände der Erfindung sind die Verwendung eines erfindungsgemäßen holografischen Mediums zur Herstellung von Hologrammen sowie ein Verfahren zur Herstellung eines erfindungsgemäßen holografischen Mediums.

Holografische Medien für die Aufnahme von Volumenhologrammen sind in den Patentanmeldungen EP 2 218 743, EP 2 372 454, WO 2011/054791 sowie WO 2011/067057 beschrieben. Die Medien des Standes der Technik umfassen einen Photopolymerfilm der leicht klebrig ist. Um eine Anhaftung von Staub oder anderen störenden Partikeln zu vermeiden, ist es daher notwendig den Photopolymerfilm durch Abdecken mit einer nicht transparenten Kaschierfolie zu schützen. Außerdem führt die Klebrigkeit bei der Replikation von Hologrammen in die Photopolymerfilme zu Problemen. So muss hier der Photopolymerfilm mit einem Masterhologramm (normalerweise auf Basis einer Silberhalogenidemulsion) in engen Kontakt gebracht werden. Dazu wird der Film entweder auf einen Glasträger über dem Masterhologramm oder direkt auf das Masterhologramm aus der Silberhalogenidemulsion laminiert. Bei einem klebrigen Photopolymerfilm können Teile davon am Glasträger haften bleiben, was zu einem erhöhten Reinigungsaufwand führt und sich so negativ auf eine kontinuierliche Prozessführung auswirken kann. Im schlimmsten Fall haftet der Photopolymerfilm so stark an dem Masterhologramm selbst, dass der Photopolymerfilm und Masterhologramm nicht ohne Zerstörung getrennt werden können. Weiterhin muss bei einigen Replikationsprozessen eine Immersionsflüssigkeit verwendet werden, um Brechungsindexunterschiede zwischen Glas und Photopolymerfilm auszugleichen. Bei den im Stand der Technik bekannten Medien, kann es dabei zu unerwünschten chemischen Veränderungen (Auswaschen der bildgebenden Komponenten, Quellung etc.) kommen, die die Qualität der erhaltenen Hologramme negativ beeinflussen können. In vielen Fällen sollen außerdem die nach der Belichtung entstandenen Hologramme mit Substraten verklebt werden. Dabei wird ein Klebstoff oder die klebende Seite eines Klebebandes direkt auf den Photopolymerfilm appliziert. Allerdings können dann Migrationsvorgänge zwischen dem Photopolymerfilm und dem Klebstoff auftreten, die zu Farbveränderungen im Hologramm führen. Bei den in den Patentanmeldungen EP 2 218 743, WO 2011/054791 sowie WO 2011/067057 beschriebenen Photopolymerfilmen treten solche Farbveränderungen bei einer Vielzahl verschiedener Klebstoffe auf.

Im Stand der Technik sind Schutzschichten, die auf unbelichtete holografische Photopolymere aufgetragen werden, beispielsweise aus den Anmeldungen US 2003148192 (A1) und CN 101320208 im Prinzip bekannt. Durch die veränderte chemische Struktur des hier verwendeten Photopolymers sind die Mehrheit der dort genannten Zusammensetzungen für Schutzschichten im vorliegenden Fall ungeeignet, da sie durch Trübung, chemische Reaktion mit dem unbelichteten Photopolymer, Unverträglichkeit oder schlechte Benetzbarkeit das Einbelichten eines Hologrammes in dem Photopolymerfilm verhindern.

Aufgabe der vorliegenden Erfindung war es daher ein holographisches Medium der eingangs erwähnten Art so weiter zu entwickeln, dass es nicht klebrig ist und gegenüber schädlichen chemischen Einflüssen etwa durch Immersionsflüssigkeiten oder Klebstoffen geschützt ist. Gleichzeitig sollen die optischen Eigenschaften des Mediums nicht negativ beeinflusst werden, so dass in dieses ohne Weiteres Hologramme einbelichtet werden können.

Diese Aufgabe ist bei einem holografischen Medium der eingangs erwähnten Art dadurch gelöst, dass die Schutzschicht Polyurethanpolymere und/oder Polychloropren enthält oder daraus besteht, die Schutzschicht für die Bestandteile des Photopolymerfilms undurchlässig, optisch klar und für elektromagnetische Strahlung mit einer Wellenlänge im Bereich von 350 bis 800 nm transparent ausgebildet ist.

Erfindungsgemäß können besonders bevorzugt die in der EP 2 372 454 beschriebenen Polyurethan-Matrixpolymere und Acrylat-Schreibmonomere verwendet werden. Diesbezüglich wird insbesondere auf die folgenden Abschnitte der EP 2 372 454 verwiesen: Polyurethan-Matrixpolymere [0016-0088]; Acrylat-Schreibmonomere [0089-0096]

Als Photoinitiatoren eigenen sich erfindungsgemäß insbesondere die in den Abschnitten [0043-0045] der EP 2 218 743 A1 genannten Verbindungen.

Es ist ebenfalls möglich, dass der Photopolymerfilm weitere Komponenten enthält. Besonders bevorzugt ist, wenn der Photopolymerfilm die in dem Abschnitt [0097] der EP 2 372 454 beschriebenen Weichmacher enthält.

Gemäß einer bevorzugten Ausführungsform der Erfindung kann die Schutzschicht wenigstens eine Oberfläche des Photopolymerfilms vollständig bedecken.

Ebenfalls bevorzugt ist, wenn die Schutzschicht eine Dicke von 1 bis 40 $\mu$m, bevorzugt von 3 bis 25 $\mu$m und ganz besonders bevorzugt von 5 bis 20 $\mu$m aufweist.

In Weiterbildung der Erfindung ist vorgesehen, dass die Schutzschicht Polyurethan-, und / oder Polychloroprenpolymere enthält oder daraus besteht.

Bei einer weiteren Ausführungsform der Erfindung kann die Schutzschicht hochmolekulare, unvernetzte Polymere oder dreidimensionale Netzwerkstrukturen hoher Netzwerkdichte enthalten oder daraus bestehen.

Dreidimensionale Netzwerkstrukturen hoher Netzwerkdichte sind insbesondere erhältlich, indem Komponenten umgesetzt werden, die zahlenmittlere Äquivalentmolmassen von < 1500 g/mol und besonders bevorzugt von < 1200

g/mol aufweisen.

Als unvernetzt werden vorliegend Polymere bezeichnet, die nur aus linearen Polymerketten bestehen,

Die hochmolekularen, unvernetzten Polymere können insbesondere eine mittlere Molmasse von > 7500 g/mol und bevorzugt von > 10000 g/mol aufweisen.

Gemäß einer weiteren bevorzugten Ausführungsform ist vorgesehen, dass die Schutzschicht erhältlich ist, indem eine wässrige oder lösungsmittelarme Polymerformulierung auf den Photopolymerfilm aufgebracht wird

Weitere bevorzugte Schutzschichten basieren auf wässrigen Dispersionen hochmolekularer Polyacrylate. Die erhaltenen Schichten sind nicht mehr klebrig, mechanisch resistent und stören die Replikation von Hologrammen in den Photopolymerfilm nicht. Nach der Einbelichtung der Hologramme lassen sich die Medien mit Hilfe Acrylat-basierter Kleber ohne Farbveränderungen im Hologramm verkleben.

Bevorzugt können auch solche Polyacrylatdispersionen Anwendung finden, die ein unpolareres Comonomer, insbesondere Styrol, aufweisen.

Ebenfalls besonders geeignet zur Herstellung von Schutzschichten im Sinne der Erfindung sind Dispersionen auf Basis von Polychloroporen.

Besonders bevorzugt sind auch Schutzschichten, enthaltend oder bestehend aus Polyurethanpolymeren, die physikalisch trocknend sind und aus bevorzugt lösungsmittelarmer Lösung oder aus wässriger Phase appliziert werden können.

Die Polyurethan-basierten Schutzschichten können unter Verwendung von 1K-Systemen (ausreagierte lösliche Polyurethane oder als Dispersion verfügbare Polyurethane) oder als 2K-Systeme (Vermischung des Isocyanats mit der isocyanat-reaktiven Komponente direkt vor der Applikation auf den Film) hergestellt werden.

<u>Zusammensetzung der 2K-Polyurethane:</u>

2K-basierte Polyurethane sind durch Umsetzung wenigstens einer Polyisocyanat-Komponente a) und wenigstens einer isocyanatreaktiven Komponente b) erhältlich.

Polyisocyanat-Komponente a):

Die Polyisocyanat-Komponente a) umfasst wenigstens eine organische Verbindung, die wenigstens zwei NCO-Gruppen aufweist (Polyisocyanat).

Als Polyisocyanat können alle dem Fachmann an sich gut bekannten Verbindungen oder deren Mischungen eingesetzt werden. Diese Verbindungen können auf aromatischer, araliphatischer, aliphatischer oder cycloaliphatischer Basis sein. In untergeordneten Mengen kann die Polyisocyanat-Komponente a) auch Monoisocyanate, d.h. organische Verbindungen mit einer NCO-Gruppe, und / oder ungesättigte Gruppen enthaltende Polyisocyanate umfassen.

Beispiele für geeignete Polyisocyanate sind Butylendiisocyanat, Hexamethylendiisocyanat (HDI), 2,2,4-Trimethylhexamethylendiisocyanat und dessen Isomere (TMDI), Isophorondiisocyanat (IPDI), 1,8-Diisocyanato-4-(isocyanatomethyl)-octan, die isomeren Bis-(4,4'-isocyanatocyclohexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und / oder 2,6-Toluylendiisocyanat, 1,5-Naphthylendiisocyanat, 2,4'- und / oder 4,4'-Diphenylmethandiisocyanat, Triphenylmethan-4,4',4"-triisocyanat oder beliebige Mischungen der vorgenannten Verbindungen.

Monomere Di- oder Triisocyanate mit Urethan-, Harnstoff-, Carbodiimid-, Acylharnstoff-, Isocyanurat-, Allophanat-, Biuret-, Oxadiazintrion-, Uretdion- und/oder Iminooxadiazindionstrukturen können ebenfalls verwendet werden.

Bevorzugt sind Polyisocyanate auf Basis aliphatischer, cycloaliphatischer und aromatischer Di- oder Triisocyanate.

Besonders bevorzugt handelt es sich bei den Polyisocyanaten um di- oder oligomerisierte aliphatische und / oder aromatische Di- oder Triisocyanate.

Ganz besonders bevorzugte Polyisocyanate sind Isocyanurate, Allophanate, Uretdione und / oder Iminooxadiazindione basierend auf TDI, HDI, TMDI oder deren Mischungen.

Die Polyisocyanat-Komponente a) kann auch NCO-funktionelle Prepolymere umfassen oder daraus bestehen. Die Prepolymere können Urethan-, Allophanat-, Biuret- und / oder Amidgruppen aufweisen. Derartige Prepolymere sind beispielsweise durch Umsetzung von Polyisocyanaten a1) mit isocyanatreaktiven Verbindungen a2) erhältlich.

Als Polyisocyanate a1) eignen sich alle oben unter a) genannten Verbindungen oder deren Mischungen

Beispiele für besonders geeignete monomere Di- oder Triisocyanate, die als Polyisocyanat a1) eingesetzt werden können, sind Butylendiisocyanat, Hexamethylendiisocyanat, Isophorondiisocyanat, Trimethylhexamethylendiisocyanat (TMDI), 1,8-Diisocyanato-4-(isocyanatomethyl)-octan, Isocyanatomethyl-1,8-octandiisocyanat (TIN), 2,4- und / oder 2,6-Toluen-diisocyanat.

Als isocyanatreaktive Verbindungen a2) können OH- und NH-funktionelle Verbindungen verwendet werden.

Die isocyanatreaktive Komponente a2) umfasst wenigstens eine organische Verbindung, die wenigstens zwei isocyanatreaktive Gruppen aufweist (isocyanatreaktive Verbindung). Im Rahmen der vorliegenden Erfindung werden als isocyanatreaktive Gruppen Hydroxy-, Amino- oder Thiogruppen angesehen.

Als isocyanatreaktive Komponente können alle Systeme eingesetzt werden, die im Mittel wenigstens 1,5 und bevorzugt 2 bis 3 isocyanatreaktive Gruppen aufweisen.

Bevorzugt werden Ethandiol, Di-, Triethylenglykol, Butandiol-1,4, Hexandiol-1,6, 2,2-Dimethyl-1,3-propandiol, Octandiol-1,8, Trimethylolpropan, Pentaerythrit, 3-Methylpentandiol, Glycerin oder Mischungen verwendet.

Weitere geeignete isocyanatreaktive Verbindungen a2) höherer Molmasse sind beispielsweise Polyester-, Polyether-, Polycarbonat-, Poly(meth)acrylat- und / oder Polyurethanpolyole.

Es ist ebenfalls möglich, als isocyanatreaktive Verbindungen a2) Amine einzusetzen. Beispiele geeigneter Amine sind Ethylendiamin, Diethylentriamin, Triethylentetramin, Propylendiamin, Diaminocyclohexan, Diaminobenzol, Diaminobisphenyl, difunktionelle Polyamine wie z.B. die Jeffamine® oder di-, tri- und höherfunktionelle aminterminierte Polymere oder deren beliebige Gemische untereinander.

Besonders bevorzugt bei der Verwendung von NCO-funktionellen Prepolymeren ist der Einsatz von Urethanen und/ oder Biureten mit primären NCO-Gruppen auf Basis von aliphatischen oder armoatischen Polyisocyanaten wie HDI und/ oder TDI.

Die Prepolymere der Polyisocyanat-Komponente a) können insbesondere einen Restgehalt an freiem monomerem Isocyanat < 1 Gew.-%, besonders bevorzugt <0,5 Gew.-% und ganz besonders bevorzugt < 0,2 Gew.-% aufweisen.

Die Polyisocyanat-Komponente a) kann auch Mischungen der vorgenannten Polyisocyanate und Prepolymere umfassen.

Es ist gegebenenfalls auch möglich, dass die Polyisocyanat-Komponente a) vollständig oder anteilsmäßig Polyisocyanate enthält, die ganz oder teilweise mit aus der Beschichtungstechnologie bekannten Blockierungsmitteln umgesetzt sind.

Isocyanatreaktive Komponente b):

Die isocyanatreaktive Komponente b) umfasst wenigstens eine organische Verbindung, die wenigstens zwei isocyanatreaktive Gruppen aufweist (isocyanatreaktive Verbindung). Als isocyanatreaktive Verbindungen können OH- und NH-funktionelle Verbindungen sowie SHfunktionelle Verbindungen verwendet werden.

Als isocyanatreaktive Komponente können alle Systeme eingesetzt werden, die im Mittel wenigstens 1,5 und bevorzugt 2 bis 3 isocyanatreaktive Gruppen aufweisen.

Geeignete isocyanatreaktive Verbindungen sind beispielsweise Polyester-, Polyether-, Polycarbonat-, Poly(meth)acrylat- und / oder Polyurethanpolyole sowie ihre amino- oder SH-terminierten Analoga.

Geeignete Polycarbonatpolyole sind in an sich bekannter Weise durch Umsetzung von organischen Carbonaten oder Phosgen mit Diolen oder Diol-Mischungen zugänglich.

Hierfür geeignete organische Carbonate sind beispielsweise Dimethyl-, Diethyl- und Diphenylcarbonat.

Geeignete mehrwertige Alkohole umfassen die oben im Rahmen der Diskussion der isocyanatreaktiven Komponente a2) genannten mehrwertigen Alkoholen einer OH-Funktionalität $\geq 2$. Bevorzugt können 1,4-Butandiol, 1,6-Hexandiol und / oder 3-Methylpentandiol eingesetzt werden.

Geeignete Polyetherpolyole sind gegebenenfalls blockweise aufgebaute Polyadditionsprodukte cyclischer Ether an OH- oder NH-funktionelle Startermoleküle. Geeignete cyclische Ether sind beispielsweise Styroloxide, Ethylenoxid, Propylenoxid, Tetrahydrofuran, Butylenoxid, Epichlorhydrin, sowie deren beliebige Mischungen. Als Startermoleküle können die oben im Rahmen der Diskussion der Polyesterpolyole genannten mehrwertigen Alkohole einer OH-Funktionalität $\geq 2$ sowie primäre oder sekundäre Amine und Aminoalkohole verwendet werden.

Bevorzugte Polyetherpolyole sind solche der vorgenannten Art, die auf Propylenoxid, Ethylenoxid und/ oder Tetrahydrofuran basieren. Besonders bevorzugt sind Polyether-Polyester-Copolyole mit einem Polyesteranteil von mindestens 35 Gewichtsprozent.

Bevorzugt finden Polyester mit terminalen OH- oder Aminogruppen Anwendung.

Besonders geeignete Polyesterpolyole sind beispielsweise lineare oder verzweigte Polyesterpolyole, die aus aliphatischen, cycloaliphatischen oder aromatischen Di- bzw. Polycarbonsäuren bzw. ihren Anhydriden durch Umsetzung mit mehrwertigen Alkoholen einer OH-Funktionalität $\geq 2$ erhältlich sind.

Beispiele zur Herstellung der Polyester besonders geeigneter Di- bzw. Polycarbonsäuren bzw. Anhydride sind Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride wie o-Phthal-, Trimellit- oder Bernsteinsäureanhydrid oder Mischungen daraus. Besonders bevorzugt werden Adipin-, o-Phthal- und Isophthalsäure oder deren entsprechende Anhydride verwendet.

Besonders zur Herstellung der Polyester geeignete Alkohole sind beispielsweise Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Trimethylolpropan, Pentyerythrit, Glycerin oder Mischungen daraus.

Bevorzugt werden Propylenglykol-1,2, Butandiol-1,4, Hexandiol-1,6, Diethylenglykol, Triethylenglykol, 2,2-Dimethyl-1,3-propandiol, Trimethylolpropan, Pentaerythrit, Glycerin oder Mischungen verwendet.

Ebenfalls möglich ist, dass die Polyesterpolyole auf Homo- oder Mischpolymerisaten von Lactonen basieren. Diese können bevorzugt durch Anlagerung von Lactonen bzw. Lactongemischen wie Butyrolacton, ε-Caprolacton und / oder Methyl-ε-caprolacton an hydroxyfunktionelle Verbindungen wie mehrwertige Alkohole einer OH-Funktionalität ≥ 2, beispielsweise der vorstehend genannten Art, erhalten werden.

Die eingesetzten Polyole haben eine OH-Funktionalität von bevorzugt 1,8 bis 4,0 und besonders bevorzugt 2,0 bis 3,3.

Neben den genannten Polyester-, Polyether-, Polycarbonat-, Poly(meth)acrylat- und / oder Polyurethanpolyolen können in der isocyanatreaktiven Komponente a2) bevorzugt auch Aspartate Anwendung finden.

Diese sind aus einer Michael-Addition eines mindestens difunktionellen Amins mit Säureanhydriden zugänglich.

Beispiele geeigneter Amine sind aliphatische, cycloapliphatische und aromatische Di-, Tri-und höher funktionelle Amine wie Ethylendiamin, Hexamethylendiamin, 2-Methylpentyldiamin-1,5, Diethylentriamin, Triethylentetramin, Propylendiamin, Diaminocyclohexan, Bis(4-aminocyclohexyl)-methan und dessen weitere substituierte Derivate, Diaminobenzol, Diaminobisphenyl und andere sowie di- und höher funktionelle Polyamine oder deren beliebige Gemische untereinander. Bevorzugt werden 2-Methylpentyldiamin-1,5, Diaminocyclohexan, Bis(4-aminocyclohexyl)-methan und Bis(4-amino-3-methyl-cyclohexyl)-methan eingesetzt.

Beispiele eingesetzter Anhydride sind die aller aliphatischen, ungesättigten Säuren, bevorzugt Dicarbonsäuren. Besonders bevorzugt werden die Anydride der Maleinsäure verwendet.

Aus Verarbeitungsgründen kann es sinnvoll sein, verschiedene Hilfs- und Zusatzstoffe einzusetzen. Dabei kann es sich beispielsweise um im Bereich der Lacktechnologie gängige Zusatzstoffe wie Lösemittel, Weichmacher, Verlaufsmittel oder Haftvermittler handeln. Als Lösungsmittel werden dabei bevorzugt Flüssigkeiten mit guten Löseeigenschaften, hoher Flüchtigkeit und niedriger Siedetemperatur eingesetzt. Es kann auch von Vorteil sein, gleichzeitig mehrere Zusatzstoffe eines Typs zu verwenden. Selbstverständlich kann es ebenfalls von Vorteil sein, mehrere Zusatzstoffe mehrerer Typen zu verwenden. Bevorzugte eingesetzte Lösungsmittel sind Ethylacetat, Butylacetat, Toluol, Xylol und 1-Methoxypropylacetat-2.

Zusammensetzung der 1K-Polyurethane:

Prinzipiell können alle bekannten wässrigen Polyurethan-Dispersionen eingesetzt werden. Bevorzugt sind jedoch anionisch hydrophilierte und anionische/nichtionisch hydrophilierte Polyurethan-Dispersionen.

Besonders bevorzugt einzusetzenden Polyurethan-Dispersionen sind erhältlich, indem

A) isocyanatfunktionelle Prepolymere aus

A1)organischen Polyisocyanaten

A2)polymeren Polyolen mit zahlenmittleren Molekulargewichten von 400 bis 8000 g/mol, vorzugsweise 400 bis 6000 g/mol und besonders bevorzugt von 600 bis 3000 g/mol, und OH-Funktionalitäten von 1,5 bis 6, bevorzugt 1,8 bis 3, besonders bevorzugt von 1,9 bis 2,1, und

A3)gegebenenfalls hydroxyfunktionellen Verbindungen mit Molekulargewichten von 62 bis 399 g/mol sowie

A4)gegebenenfalls isocyanatreaktiven, anionischen oder potentiell anionischen und/oder gegebenenfalls nichtionischen Hydrophilierungsmitteln,
hergestellt, und

B) dessen freie NCO-Gruppen dann ganz oder teilweise

B1)gegebenenfalls mit aminofunktionellen Verbindungen mit Molekulargewichten von 32 bis 400 g/mol und

B2)mit aminofunktionellen, anionischen oder potentiell anionischen Hydrophilierungsmitteln

unter Kettenverlängerung umgesetzt werden und die Prepolymere vor, während oder nach Schritt B) in Wasser dispergiert werden.

Isocyanatreaktive Gruppen sind beispielsweise primäre und sekundäre Aminogruppen, Hydroxygruppen oder Thiolgruppen.

Bevorzugt sind diese wässrigen Polyurethan-Dispersionen anionisch mittels Sulfonatgruppen und/oder Carboxylatgruppen hydrophiliert. Besonders bevorzugt sind zur anionischen Hydrophilierung ausschließlich Sulfonatgruppen enthalten.

Bevorzugt besitzen die Polyurethan-Dispersionen Feststoffgehalte von 10 bis 70 Gew.-%, besonders bevorzugt 30 bis 70 Gew.-%, ganz besonders bevorzugt 30 bis 65 Gew.-% bezogen auf das darin enthaltene Polyurethan.

Geeignete Polyisocyanate der Komponente A1) sind die dem Fachmann an sich bekannten aliphatischen, aromatischen oder cycloaliphatischen Polyisocyanate einer NCO-Funktionalität von größer oder gleich 2. Besonders bevorzugt werden in A1) Hexamethylendiisocyanat, Isophorondiisocyanat oder die isomeren Bis-(4,4'-isocyanatocyclohexyl)methane sowie Mischungen der vorgenannten Diisocyanate eingesetzt.

In A2) werden polymere Polyole mit einem zahlenmittleren Molekulargewicht $M_n$ von 400 bis 8000 g/mol, bevorzugt von 400 bis 6000 g/mol und besonders bevorzugt von 600 bis 3000 g/mol eingesetzt. Diese weisen bevorzugt eine OH-Funktionalität von 1,5 bis 6, besonders bevorzugt von 1,8 bis 3, ganz besonders bevorzugt von 1,9 bis 2,1 auf.

Solche polymeren Polyole sind die in der Polyurethanlacktechnologie an sich bekannten Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und Polyesterpolycarbonatpolyole. Diese können in A2) einzeln oder in beliebigen Mischungen untereinander eingesetzt werden.

Bevorzugte Komponenten in A2) sind Polytetramethylenglykolpolyether und PolycarbonatPolyole bzw. deren Mischungen und besonders bevorzugt sind Polytetramethylenglykolpolyether.

In A3) können Polyole des genannten Molekulargewichtsbereichs mit bis zu 20 Kohlenstoffatomen, wie Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclohexyl)propan), Trimethylolpropan, Trimethylolethan, Glycerin, Pentaerythrit sowie deren beliebige Mischungen untereinander eingesetzt werden.

Geeignete ionisch oder potentiell ionisch hydrophilierende Verbindungen entsprechend der Definition der Komponente A4) sind z.B. Mono- und Dihydroxycarbonsäuren, Mono- und Dihydroxysulfonsäuren, sowie Mono- und Dihydroxyphosphonsäuren und ihre Salze wie Dimethylolpropionsäure, Dimethylolbuttersäure, Hydroxypivalinsäure, Äpfelsäure, Zitronensäure, Glykolsäure, Milchsäure, das propoxylierte Addukt aus 2-Butendiol und $NaHSO_3$, z.B. beschrieben in der DE-A 2 446 440 (Seite 5-9, Formel I-III).

Geeignete nichtionisch hydrophilierende Verbindungen der Komponente A4) sind z.B. Polyoxyalkylenether, die mindestens eine Hydroxy-, Amino- oder Thiolgruppe enthalten. Beispiele sind die monohydroxyfunktionellen, im statistischen Mittel 5 bis 70, bevorzugt 7 bis 55 Ethylenoxideinheiten pro Molekül aufweisenden Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38). Diese sind entweder reine Polyethylenoxidether oder gemischte Polyalkylenoxidether, wobei sie mindestens 30 mol-%, bevorzugt mindestens 40 mol-% bezogen auf alle enthaltenen Alkylenoxideinheiten an Ethylenoxideinheiten enthalten.

Als Komponente B1) können organische Di- oder Polyamine wie beispielsweise 1,2-Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 4,4-Diaminodicyclohexylmethan, Hydrazinhydrat, und/oder Dimethylethylendiamin eingesetzt werden. Bevorzugt werden 1,2-Ethylendiamin, Bis(4-aminocyclohexyl)methan, 1,4-Diaminobutan, Isophorondiamin, Ethanolamin, Diethanolamin und Diethylentriamin eingesetzt.

Geeignete anionisch hydrophilierende Verbindungen der Komponente B2) sind Alkalimetallsalze der Mono- und Diaminosulfonsäuren. Beispiele solcher anionischen Hydrophilierungsmittel sind Salze der 2-(2-Aminoethylamino)ethansulfonsäure, Ethylendiamin-propyl- oder -butylsulfonsäure, 1,2- oder 1,3-Propylendiamin-ß-ethylsulfonsäure oder Taurin. Weiterhin kann das Salz der Cyclohexylaminopropansulfonsäure (CAPS) aus WO-A 01/88006 als anionisches Hydrophilierungsmittel verwendet werden.

Besonders bevorzugte anionische Hydrophilierungsmittel B2) sind solche, die Sulfonatgruppen als ionische Gruppen und zwei Aminogruppen enthalten, wie die Salze der 2-(2-Aminoethylamino)ethylsulfonsäure und 1,3-Propylendiamin-β-ethylsulfonsäure.

Zur Hydrophilierung können auch Mischungen aus anionischen und nichtionischen Hydrophilierungsmitteln verwendet werden.

Zur Herstellung der Polyurethan-Dispersionen können alle aus dem Stand der Technik bekannten Verfahren wie z. B. Prepolymer-Mischverfahren, Acetonverfahren oder Schmelzdispergierverfahren verwendet werden. Bevorzugt wird nach dem Aceton-Verfahren verfahren.

Neben Polyurethan-Dispersionen können auch lösungsmittelbasierte 1K-PU-Systeme Anwendung finden. Bevorzugt einzusetzende Polyurethan-Lösungen sind erhältlich nach einem Prepolymerisationverfahren, indem

isocyanatfunktionelle Prepolymere aus

A1) organischen Polyisocyanaten

A2) polymeren Polyolen mit zahlenmittleren Molekulargewichten von 400 bis 8000 g/mol, vorzugsweise 400 bis 6000 g/mol und besonders bevorzugt von 600 bis 3000 g/mol, und OH-Funktionalitäten von 1,5 bis 6, bevorzugt 1,8 bis 3, besonders bevorzugt von 1,9 bis 2,1, und

A3) gegebenenfalls hydroxyfunktionellen Verbindungen mit Molekulargewichten von 62 bis 399 g/mol hergestellt werden, sowie
die freien NCO-Gruppen der Prepolymeren aus A) dann ganz oder teilweise mit

B1)gegebenenfalls mit aminofunktionellen Verbindungen mit Molekulargewichten von 32 bis 400 g/mol

unter Kettenverlängerung umgesetzt werden,
wobei die Prepolymere vor, während oder nach Schritt B) in einem oder mehreren organischen Lösungsmitteln gelöst werden.

Die zur Herstellung der Polyurethan-Lösungen genannten Bausteine A1), A2), A3) und B1) entsprechen den Bausteinen, die auch zum Herstellen von Dispersionen geeignet sind.

Die Verfahren zur Herstellung von Polyurethan-Lösungen einschließlich der Auswahl geeigneter Lösemittel, Rührgefäße und Lösemittel sind im Stand der Technik bekannt.

Bevorzugt besitzen die zu verwendenden Polyurethan-Lösungen Feststoffgehalte von 5 bis 70 Gew.-%, besonders bevorzugt 15 bis 60 Gew.-%, ganz besonders bevorzugt 20 bis 40 Gew.-% bezogen auf das Gesamtgewicht der Polyurethan-Lösung.

Die zu verwendenden Polymer-Dispersionen bzw. Lösungen bzw. die daraus hergestellten können zusätzlich auch Hilfs- und Zusatzstoffe enthalten. Beispiele für solche Hilfs- und Zusatzstoffe sind Vernetzer, Verdicker, Colösemittel, Thixotropiermittel, Stabilisatoren, Antioxidantien, Lichtschutzmittel, Weichmacher, Pigmente, Füllstoffe, Hydrophobierungsmittel und Verlaufshilfsmittel.

<u>Zusammensetzung von Dual Cure-Systemen</u>

Neben den oben beschriebenen Polyurethan-Dispersionen und -Lösungen können auch solche Polyurethan-Systeme Anwendung finden, die durch aktinische Strahlung nachvernetzbare Gruppen enthalten. Dabei können bevorzugt ethylenisch ungesättigteVerbindungenverwendet werden.

Die Schutzschicht kann in diesem Fall ein Polyurethan-Polymer enthalten, das weitere polymere Einheiten wie beispielsweise Polyharnstoff-Einheiten, Polyester-Einheiten und dergleichen mehr aufweisen kann. Das Polyurethanpolymer kann insbesondere (Meth)acrylatgruppen aufweisen. Der Begriff (Meth)acrylatgruppen ist im Sinne der vorliegenden Erfindung als Acrylatgruppen und/oder Methacrylatgruppen umfassend zu verstehen. Die (Meth)acrylatgruppen können grundsätzlich an beliebiger Stelle des Polyurethan-Polymers oder der weiteren Einheiten an das Polymer angebunden sein. Beispielsweise können sie Teil einer Polyether- oder Polyester(meth)acrylat-Polymereinheit sein.

Das (Meth)acrylatgruppen aufweisende Polyurethan kann als wässrige Dispersion vorliegen und so auch eingesetzt werden. Wässrige Dispersionen bieten den Vorteil, dass auch besonders hochmolekulare Polyurethane in einem Beschichtungsmittel mit niedriger dynamischer Viskosität verarbeitet werden können, da bei Dispersionen die Viskosität vom Molekulargewicht der Bestandteile der dispersen Phase unabhängig sind.

Geeignete Dispersionen sind beispielsweise (Meth)acrylatgruppen aufweisende Polyurethan-Dispersionen alleine, oder in Mischung mit (Meth)acrylatgruppen aufweisenden niedermolekularen Verbindungen und/oder dispergierten Polymeren ohne Acrylat- oder Methacrylatgruppen.

Erfindungsgemäß ist vorgesehen, dass das (Meth)acrylatgruppen aufweisende Polyurethan-Polymer erhältlich ist aus der Reaktion einer Reaktionsmischung umfassend:

(1) Polyisocyanate und

(ml) (Meth)acrylatgruppen umfassende und gegenüber Isocyanaten reaktive Verbindungen Geeignete Polyisocyanate (1), worunter auch Diisocyanate zu verstehen sind, sind aromatische, araliphatische, aliphatische oder cycloaliphatische Polyisocyanate. Es können auch Mischungen solcher Di- oder Polyisocyanate eingesetzt werden. Beispiele geeigneter Polyisocyanate sind Butylendiisocyanat, Hexamethylendiisocyanat (HDI), Isophorondiisocyanat (IPDI), 2,2,4 und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4- und/oder 2,6-Toluylendiisocyanat, die isomeren Xylendiisocyanate, 1,5-Naphthylendiisocyanat, 2,4'- oder 4,4'-Diphenylmethandiisocyanat, Triphenylmethan-4,4',4"-triisocyanat oder deren Derivate mit Urethan-, Isocyanurat-, Allophanat-, Biuret-, Oxadiazintrion,- Uretdion-, Iminooxadiazindionstruktur und Mischungen derselben. Bevorzugt sind Di- oder Polyisocyanate mit cycloaliphatischer oder aromatischer Struktur, da ein hoher Anteil an diesen Strukturelementen, die Trocknungseigenschaften insbesondere die Blockfestigkeit der Beschichtung vor der UV-Härtung positiv beeinflusst. Besonders bevorzugt Diisocyanate sind Isophorondiisocyanat und die isomeren Bis(4,4'-isocyanatocyclohexyl)methane sowie deren Mischungen.

Die Komponente (ml) umfasst vorzugsweise hydroxyfunktionelle Acrylate oder Methacrylate. Beispiele sind 2-Hydroxyethyl(meth)acrylat, Polyethylenoxid-mono-(meth)acrylate, Polypropylenoxidmono(meth)acrylate, Polyalkylenoxidmono(meth)acrylate, Poly(ε-caprolacton)mono(meth)acrylate, wie Pemcure® 12A (Cognis, Düsseldorf, DE), 2-Hydroxypropyl(meth)acrylat, 4-Hydroxybutyl(meth)acrylat, 3-Hydroxy-2,2-dimethylpropyl(meth)acrylat, die Acrylsäure- und/oder Methacrylsäureteilester mehrwertiger Alkohole wie Trimethylolpropan, Glycerin, Pentaerythrit, Dipentaerythrit, Sorbit, ethoxiliertes, propoxiliertes oder alkoxyliertes Trimethylolpropan, Glycerin, Pentaerythrit, Dipentaerythrit oder deren technische Gemische. Bevorzugt sind die acrylierten Monoalkohole. Geeignet sind auch Alkohole, die sich aus der Umsetzung von doppelbindungshaltigen Säuren mit gegebenenfalls doppelbindungshaltigen, monomeren Epoxidverbindungen erhalten lassen, so zum Beispiel die Umsetzungsprodukte von (Meth)acrylsäure mit Glycidyl(meth)acrylat oder dem Glycidylester der Versaticsäure.

Weiterhin können Isocyanat-reaktive oligomere oder polymere ungesättigte (Meth)acrylatgruppen enthaltende Verbindungen alleine oder in Kombination mit den vorgenannten monomeren Verbindungen eingesetzt werden. Bevorzugt werden als Komponente (ml) hydroxylgruppenhaltige Polyesteracrylate mit einem OH-Gehalt von ≥ 30 mg KOH/g bis ≤ 300 mg KOH/g, bevorzugt > 60 mg KOH/g bis ≤ 200 mg KOH/g, besonders bevorzugt > 70 mg KOH/g bis ≤ 120 mg KOH/g eingesetzt.

Bei der Herstellung der hydroxyfunktionellen Polyesteracrylate können insgesamt 7 Gruppen von Monomerbestandteilen zur Anwendung kommen:

1. (Cyclo)Alkandiole wie zweiwertige Alkohole mit (cyclo)aliphatisch gebundenen Hydroxylgruppen des Molekulargewichtsbereichs von ≥ 62 g/mol bis ≤ 286 g/mol, zum Beispiel Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, wie zum Beispiel Diethylenglykol, Triethylenglykol, Tetraethylenglykol, Dipropylenglykol, Tripropylenglykol, Polyethylen-, Polypropylen- oder Polybutylenglykole mit einem Molekulargewicht von ≥ 200 g/mol bis ≤ 4000 g/mol, bevorzugt ≥ 300 g/mol bis ≤ 2000 g/mol, besonders bevorzugt ≥ 450 g/mol bis ≤ 1200 g/mol. Umsetzungsprodukte der zuvor genannten Diole mit ε-Caprolacton oder anderen Lactonen können ebenfalls als Diole zum Einsatz gelangen.

2. Drei- und höherwertige Alkohole des Molekulargewichtsbereichs von ≥ 92 g/mol bis ≤ 254 g/mol, wie zum Beispiel Glycerin, Trimethylolpropan, Pentaerythrit, Dipentaerythrit und Sorbit oder auf diesen Alkoholen gestartete Polyether wie zum Beispiel das Umsetzungsprodukt von 1 mol Trimethylolpropan mit 4 mol Ethylenoxid.

3. Monoalkohole wie zum Beispiel Ethanol, 1- und 2-Propanol, 1- und 2-Butanol, 1-Hexanol, 2-Ethylhexanol, Cyclohexanol und Benzylalkohol.

4. Dicarbonsäuren des Molekulargewichtsbereichs ≥ 104 g/mol bis ≤ 600 g/mol und/oder deren Anhydride, wie zum Beispiel Phthalsäure, Phthalsäureanhydrid, Isophthalsäure, Tetrahydrophthalsäure, Tetra-hydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimerfettsäuren.

5. Höherfunktionelle Carbonsäuren oder deren Anhydride wie zum Beispiel Trimellithsäure und Trimellithsäureanhydrid.

6. Monocarbonsäuren, wie zum Beispiel Benzoesäure, Cyclohexancarbonsäure, 2-Ethylhexansäure, Capronsäure, Caprylsäure, Caprinsäure, Laurinsäure, natürliche und synthetische Fettsäuren.

7. Acrylsäure, Methacrylsäure oder dimere Acrylsäure.

Geeignete hydroxylgruppenhaltige Polyesteracrylate umfassen das Umsetzungsprodukt von mindestens einem Bestandteil aus Gruppe 1 oder 2 mit mindestens einem Bestandteil aus Gruppe 4 oder 5 und mindestens einem Bestandteil aus Gruppe 7.

Gegebenenfalls können in diese Polyesteracrylate auch dispergierend wirkende Gruppen eingebaut werden. So können als Alkoholkomponente anteilig Polyethylenglykole und/oder Methoxypolyethylenglykole mitverwendet werden. Als Verbindungen seien beispielsweise auf Alkoholen gestartete Polyethylenglykole, Polypropylenglykole und deren Blockcopolymere sowie die Monomethylether dieser Polyglykole genannt. Besonders geeignet ist Polyethylenglykol-1500- und/oder Polyethylenglykol-500-mono-methylether.

Weiterhin ist es möglich, nach der Veresterung einen Teil von Carboxylgruppen, insbesondere die der (Meth)acrylsäure, mit Mono-, Di- oder Polyepoxiden umzusetzen. Bevorzugt sind beispielsweise die Epoxide (Glycidylether) von monomeren, oligomeren oder polymeren Bisphenol-A, Bisphenol-F, Hexandiol, Butandiol und/oder Trimethylolpropan oder deren ethoxilierten und/oder propoxilierten Derivaten. Diese Reaktion kann insbesondere zur Erhöhung der OH-Zahl des Polyester(meth)acrylats verwendet werden, da bei der Epoxid-Säure-Reaktion jeweils eine OH-Gruppe entsteht. Die Säurezahl des resultierenden Produkts liegt zwischen ≥ 0 mg KOH/g und ≤ 20 mg KOH/g, bevorzugt zwischen > 0,5 mg KOH/g und ≤ 10 mg KOH/g und besonders bevorzugt zwischen ≥ 1 mg KOH/g und ≤ 3 mg KOH/g. Die Reaktion wird bevorzugt durch Katalysatoren wie Triphenylphosphin, Thiodiglykol, Ammonium- und/oder Phosphoniumhalogeniden und/oder Zirkon- oder Zinnverbindungen wie Zinn(II)ethylhexanoat katalysiert.

Ebenfalls bevorzugt als Komponente (m1) sind hydroxylgruppenhaltige Epoxy(meth)acrylate mit OH-Gehalten von ≥ 20 mg KOH/g bis ≤ 300 mg KOH/g, bevorzugt von ≥ 100 mg KOH/g bis ≤ 280 mg KOH/g, besonders bevorzugt von ≥ 150 mg KOH/g bis ≤ 250 mg KOH/g oder hydroxylgruppenhaltige Polyurethan(meth)acrylate mit OH-Gehalten von ≥ 20 mg KOH/g bis ≤ 300 mg KOH/g, bevorzugt von ≥ 40 mg KOH/g bis ≤ 150 mg KOH/g, besonders bevorzugt von ≥ 50 mg KOH/g bis ≤ 100 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten. Hydroxylguppenhaltige Epoxy(meth)acrylate basieren insbesondere auf Umsetzungsprodukten von Acrylsäure und/oder Methacrylsäure mit Epoxiden (Glycidylverbindungen) von monomeren, oligomeren oder polymeren Bisphenol-A, Bisphenol-F, Hexandiol und/oder Butandiol oder deren ethoxilierten und/oder propoxilierten Derivaten.

Die Beschichtung kann anorganische Nanopartikel enthalten. Als Nanopatikel kommen anorganische Oxide, Mischoxide, Hydroxide, Sulfate, Carbonate, Carbide, Boride und Nitride von Elementen der II bis IV Hauptgruppe und/oder Elemente der I bis VIII Nebengruppe des Periodensystems einschließlich der Lanthanide in Frage. Bevorzugte Partikel sind solche aus Siliziumoxid, Aluminiumoxid, Ceroxid, Zirkonoxid, Nioboxid und Titanoxid, besonders bevorzugt sind hierbei Siliziumoxid-Nanopartikel.

Die eingesetzten Partikel weisen mittlere Teilchengrößen von ≥ 1 nm bis ≤ 200 nm, bevorzugt von ≥ 3 nm bis ≤ 50 nm, besonders bevorzugt von ≥ 5 nm bis ≤ 7 nm auf. Die mittlere Teilchengröße kann vorzugsweise als Z-Mittelwert mittels dynamischer Lichtstreuung in Dispersion bestimmt werden. Unterhalb von 1 nm Partikelgröße erreichen die Nanopartikel die Größe der Polymerpartikel. Solch kleine Nanopartikel können dann zu einem Viskositätsanstieg der Beschichtung führen, welches nachteilig ist. Oberhalb von 200 nm Partikelgröße können die Partikel teilweise mit bloßem Auge wahrgenommen werden, was nicht erwünscht ist.

Bevorzugt weisen > 75 %, besonders bevorzugt > 90 %, ganz besonders bevorzugt > 95 % aller eingesetzten Partikel die vorstehend definierten Größen auf. Mit zunehmendem Grobanteil in der Partikelgesamtheit werden die optischen Eigenschaften der Beschichtung schlechter, insbesondere kann eine Trübung auftreten.

Das Partikel können so ausgewählt werden, dass der Brechungsindex ihres Materials dem Brechungsindex der ausgehärteten strahlungshärtbaren Beschichtung entspricht. Dann weist die Beschichtung transparente optische Eigenschaften auf. Vorteilhaft ist beispielsweise ein Brechungsindex im Bereich von ≥ 1,35 bis ≤ 1,45.

Die nichtflüchtigen Anteile der strahlungshärtbaren Schicht können beispielsweise die nachfolgenden Mengenanteile ausmachen. Die Nanopartikel können in Mengen von ≥ 1 Gewichts-% bis ≤ 60 Gewichts-%, bevorzugt ≥ 5 Gewichts-% bis ≤ 50 Gewichts-% und insbesondere von ≥ 10 Gewichts-% bis ≤ 40 Gewichts-% zugegen sein. Es können weitere Verbindungen wie zum Beispiel monomere Vernetzer in einem Anteil von > 0 Gewichts-% bis ≤ 40 Gewichts-% und insbesondere von ≥ 15 Gewichts-% bis ≤ 20 Gewichts-% vorhanden sein. Das Polyurethanpolymer kann dann die Differenz zu 100 Gewichts-% ausmachen. Generell gilt die Vorgabe, dass die Summe der einzelnen Gewichtsanteile ≤ 100 Gewichts-% beträgt.

In einer weiteren Ausführungsform liegt das Gewichtsmittel Mw des Polyurethan-Polymers in einem Bereich von ≥ 250000 g/mol bis ≤ 350000 g/mol. Das Molekulargewicht kann mittels Gelpermeationschromatographie (GPC) bestimmt werden.

In einer weiteren Ausführungsform umfasst die Reaktionsmischung weiterhin die folgenden Komponenten:

(m2)hydrophilierend wirkende Verbindungen mit ionischen und/oder in ionische Gruppen überführbare Gruppen und/oder nichtionischen Gruppen

(m3)Polyolverbindungen mit einem mittleren Molekulargewicht von ≥ 50 g/mol bis ≤ 500 g/mol und einer Hydroxylfunktionalität von ≥ 2 und

(m4) aminofunktionelle Verbindungen.

Die Komponente (m2) umfasst ionische Gruppen, die entweder kationischer oder anionischer Natur sein können und/oder nichtionische hydrophile Gruppen. Kationisch, anionisch oder nichtionisch dispergierend wirkende Verbindungen sind solche, die beispielsweise Sulfonium-, Ammonium-, Phosphonium-, Carboxylat-, Sulfonat-, Phosphonat-Gruppen oder die Gruppen, die durch Salzbildung in die vorgenannten Gruppen überführt werden können (potentiell ionische Gruppen) oder Polyethergruppen enthalten und durch vorhandene isocyanatreaktive Gruppen in die Makromoleküle eingebaut werden können. Bevorzugt geeignete isocyanatreaktive Gruppen sind Hydroxyl- und Amingruppen.

Geeignete ionische oder potentiell ionische Verbindungen (m2) sind zum Beispiel Mono-und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, N-Cyclohexylaminopropiosulfonsäure, Lysin, 3,5-Diaminobenzoesäure, Additionsprodukte von IPDI und Acrylsäure und dessen Alkaliund/oder Ammoniumsalze; das Addukt von Natriumbisulfit an Buten-2-diol-1,4, Polyethersulfonat, das propoxylierte Addukt aus 2-Butendiol und $NaHSO_3$, sowie in kationische Gruppen überführbare Bausteine wie N-Methyl-diethanolamin als hydrophile Aufbaukomponenten. Bevorzugte ionische oder potentielle ionische Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Geeignete nichtionisch hydrophilierend wirkende Verbindungen sind zum Beispiel Polyoxyalkylenether, die mindestens eine Hydroxy- oder Aminogruppe enthalten. Diese Polyether enthalten einen Anteil von ≥ 30 Gew.-% bis ≤ 100 Gew.-% an Bausteinen, die vom Ethylenoxid abgeleitet sind. In Frage kommen linear aufgebaute Polyether einer Funktionalität zwischen ≥ 1 und ≤ 3, aber auch Verbindungen der allgemeinen Formel (I),

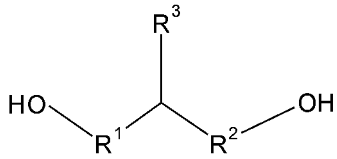

(I)

in welcher

$R^1$ und $R^2$ unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und $R^3$ für einen alkoxyterminierten Polyethylenoxidrest steht.

Nichtionisch hydrophilierend wirkende Verbindungen sind beispielsweise auch einwertige, im statistischen Mittel ≥ 5 bis ≤ 70, bevorzugt ≥ 7 bis ≤ 55 Ethylenoxideinheiten pro Molekül aufweisende Polyalkylenoxidpolyetheralkohole, wie sie durch Alkoxylierung geeigneter Startermoleküle zugänglich sind.

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu ≥ 30 mol-%, bevorzugt zu ≥ 40 mol-% Ethylenoxideinheiten umfassen. Bevorzugte nichtionische Verbindungen sind monofunktionelle gemischte Polyalkylenoxidpolyether, die ≥ 40 mol-% Ethylenoxid- und ≤ 60 mol-% Propylenoxideinheiten aufweisen.

Die Komponente (m2) umfasst bevorzugt ionische Hydrophilierungsmitteln, da nicht ionische Hydrophilierungsmittel sich eher negativ auf die Trocknungseigenschaften und insbesondere die Blockfestigkeit vor der UV-Härtung auswirken können.

Geeignete niedermolekulare Polyole (m3) sind kurzkettige, vorzugsweise ≥ 2 bis ≤ 20 Kohlenstoffatome enthaltende aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Die Komponente (m4) kann ausgewählt sein aus der Gruppe der Polyamine (worunter auch Diamine zu verstehen sind), die zum Erhöhen der Molmasse eingesetzt werden und bevorzugt gegen Ende der Polyadditionsreaktion zugegeben werden. Bevorzugt findet diese Reaktion im wässrigen Medium statt. Dann sollten die Polyamine reaktiver als Wasser gegenüber den Isocyanatgruppen der Komponente (a) sein. Exemplarisch seien genannt Ethylendiamin, 1,3-Propylendiamin, 1,6-Hexamethylendiamin, Isophorondiamin, 1,3-, 1,4-Phenylendiamin, 4,4'-Diphenylmethandiamin, aminofunktionelle Polyethylenoxide oder Polypropylenoxide, die unter dem Namen Jeffamin®, D-Reihe (Fa. Huntsman Corp. Europe, Belgien) erhältlich sind, Diethylentriamin, Triethylentetramin und Hydrazin. Bevorzugt sind Isophorondiamin, Ethylendiamin, 1,6-Hexamethylendiamin. Besonders bevorzugt ist Ethylendiamin.

Anteilig können auch Monoamine, wie zum Beispiel Butylamin, Ethylamin und Amine der Jeffamin® M-Reihe (Huntsman Corp. Europe, Belgien), aminofunktionelle Polyethylenoxide und Polypropylenoxide zugesetzt werden.

In einer weiteren Ausführungsform umfasst die Reaktionsmischung weiterhin die folgende Komponente:

(m5)Polyolverbindungen mit einem mittleren Molekulargewicht von ≥ 500 g/mol bis ≤ 13000 g/mol und einer mittleren Hydroxylfunktionalität von ≥ 1,5 bis ≤ 5.

Geeignete höhermolekulare Polyole (m5) sind Polyole (worunter auch Diole zu verstehen sind) mit einem zahlenmittleren Molekulargewicht im Bereich von ≥ 500 g/mol bis ≤ 13000 g/mol, bevorzugt ≥ 700 g/mol bis ≤ 4000 g/mol. Bevorzugt werden Polymere mit einer mittleren Hydroxylfunktionalität von ≥ 1,5 bis ≤ 2,5, bevorzugt von ≥ 1,8 bis ≤ 2,2, besonders bevorzugt von ≥ 1,9 bis ≤ 2,1. Dazu zählen zum Beispiel Polyesteralkohole auf Basis von aliphatischen, cycloaliphatischen und/oder aromatischen Di-, Tri- und/oder Polycarbonsäuren mit Di-, Tri-, und/oder Polyolen sowie Polyesteralkohole auf Lacton-Basis. Bevorzugte Polyesteralkohole sind zum Beispiel Umsetzungsprodukte von Adipinsäure mit Hexandiol, Butandiol oder Neopentylglykol oder Mischungen der genannten Diole des Molekulargewichts von ≥ 500 g/mol bis ≤ 4000 g/mol, besonders bevorzugt ≥ 800 g/mol bis ≤ 2500 g/mol. Ebenfalls geeignet sind Polyetherole, die durch Polymerisation von cyclischen Ethern oder durch Umsetzung von Alkylenoxiden mit einem Startermolekül erhältlich sind. Beispielhaft seien genannt die Polyethylen- und/oder Polypropylenglykole eines mittleren Molekulargewichts von ≥ 500 g/mol bis ≤ 13000 g/mol, weiterhin Polytetrahydrofurane eines mittleren Molekulargewichts von ≥ 500 g/mol bis ≤ 8000 g/mol, bevorzugt von ≥ 800 g/mol bis ≤ 3000 g/mol.

Ebenfalls geeignet sind hydroxyl-terminierte Polycarbonate, die durch Umsetzung von Diolen oder auch Lacton-modifizierten Diolen oder auch Bisphenolen, wie zum Beispiel Bisphenol A, mit Phosgen oder Kohlensäurediestern wie Diphenylcarbonat oder Dimethylcarbonat zugänglich sind. Beispielhaft seine genannt die polymeren Carbonate des 1,6-Hexandiols eines mittleren Molekulargewichts von ≥ 500 g/mol bis ≤ 8000 g/mol, sowie die Carbonate von Umsetzungsprodukten des 1,6-Hexandiols mit ε-Caprolacton im molaren Verhältnis von ≥ 0,1 bis ≤ 1. Bevorzugt sind vorgenannte Polycarbonatdiole eines mittleren Molekulargewichts von ≥ 800 g/mol bis ≤ 3000 g/mol auf Basis 1,6-Hexandiol und/oder Carbonate von Umsetzungsprodukten des 1,6-Hexandiols mit ε-Caprolacton im molaren Verhältnis von ≥ 0,33 bis ≤ 1. Hydroxyl-terminierte Polyamidalkohole und Hydroxyl-terminierte Polyacrylatdiole sind ebenfalls einsetzbar.

In einer weiteren Ausführungsform weist in der Reaktionsmischung die Anzahl der Hydroxylgruppen in der Komponente (m3) einen Anteil an der Gesamtmenge der Hydroxylgruppen und Aminogruppen von ≥ 5 mol-% bis ≤ 25 mol-% auf, wobei die Hydroxylgruppen von Wasser in der Reaktionsmischung hierbei nicht berücksichtigt werden. Dieser Anteil kann auch in einem Bereich von ≥ 10 mol-% bis ≤ 20 mol-% oder von ≥ 14 mol-% bis ≤ 18 mol-% liegen. Hierunter ist zu verstehen, dass die Anzahl der OH-Gruppen in der Komponente (m3) in der Gesamtheit der OH- und $NH_2$-Gruppen tragenden Verbindungen, also in der Gesamtheit der Komponenten (m1), (m2), (m3) und (m4) sowie, falls (m5) auch anwesend ist, in der Gesamtheit der Komponenten (m1), (m2), (m3), (m4) und (m5) in den genannten Bereichen liegt. Bei der Berechung wird Wasser nicht berücksichtigt. Durch den Anteil der Komponente (m3) kann der Verzweigungsgrad des Polymers beeinflusst werden, wobei ein höherer Verzweigungsgrad vorteilhaft ist. Hierdurch kann das Antrocknungsverhalten verbessert werden.

In einer weiteren Ausführungsform umfasst die Reaktionsmischung weiterhin die folgende Komponente:

(m6)(Meth)acrylatgruppen umfassende und gegenüber Isocyanaten nicht reaktive und/oder nicht zur Reaktion gebrachte Verbindungen. Sie werden bevorzugt von ≥ 1 Gewichts-% bis ≤ 35 Gewichts-%, insbesondere von ≥ 5 Gewichts-% bis ≤ 25 Gewichts-% und ganz besonders bevorzugt von ≥ 10 Gewichts-% bis ≤ 20 Gewichts-% des Gesamtfestkörpersgehaltes der Reaktionsmischung eingesetzt.

In der Reaktionsmischung können weiterhin die in der Technologie der Lacke, Farben, Druckfarben üblichen Zusätze und/oder Hilfs- und/oder Lösemittel enthalten sein. Beispiele hierfür sind insbesondere Fotoinitiatoren, Lichtschutzmittel, Verlaufs- und Netzadditive.

<u>Zusammensetzung der Polyacrylatdispersionen:</u>

Neben den oben genannten Polyurethan-Dispersionen finden auch Polyacrylat-Dispersionen Anwendung. Vorzugsweise weist das Acrylatpolymer ein gewichtsmittleres Molekulargewicht Mw im Bereich von $10^3$ bis $10^6$ g/mol, besonders bevorzugt im Bereich von $10^4$ bis $5*10^5$ g/mol.
Vorzugsweise weist das Acrylatpolymer in der Dispersion einen mittleren Teilchendurchmesser im Bereich von 40 bis 200 nm, ganz besonders bevorzugt im Bereich von 80 bis 160 nm auf. Die Bestimmung des Teilchendurchmessers erfolgt mithilfe von Laser-Korrelations-Spektroskopie (Gerät: Malvern Zetasizer 1000, Malvern Instruments LTD), es sind die Z-Mittel angegeben.
Der Feststoffgehalt der Polyacrylat -Dispersionen liegt zwischen 25 und 65 Gew.-%, bevorzugt zwischen 30 und 55 Gew.-%, ganz besonders bevorzugt zwischen 33 und 45 Gew.-%. Der Feststoffgehalt einer Dispersion wird generell über das Verhältnis von Wasser zu organischen Ausgangsstoffen bestimmt.
Der pH-Wert der Polyacrylat-Dispersionen ist durch Zugabe definierter Mengen einer Base variierbar und kann zwischen pH 3 bis 12 liegen, bevorzugt ist ein pH-Wert von 6 bis 9. Zumeist erfolgt die Polymerisation im saurem pH-Bereich und die Neutralisation erfolgt nach beendeter Polymerisation. Es ist aber auch möglich einen Teil der Base schon im Verlauf der Polymerisation zuzuführen, um gegebenenfalls einer Agglomeration vorzubeugen. Als Basen können die dem Fachmann bekannten anorganischen oder organischen Basen verwendet werden, dazu zählen z.B. wässrige Lösungen von Alkalihydroxiden, Ammoniumhydroxid, organische Amine wie Triethylamin oder Ethyldiisopropylamin. Bevorzugt werden Alkalihydroxide und Ammoniumhydroxid.
Die verwendeten Polyacrylat-Dispersionen der vorliegenden Erfindung können enthalten:

aa) C1-C20-Alkylacrylate,

ba) C1-C20-Alkylmethacrylate,

ca) Säurefunktionelle, olefinisch ungesättigte Monomere

da) gegebenenfalls Styrol und/oder andere Vinylaromaten mit bis zu 20 C-Atomen, sowie

ea) gegebenenfalls hydroxyfunktionelle Monomere.

Bevorzugt ergänzen sich die Gewichtsanteile der Komponente aa), ba), ca) da) und ea) zu 100%.
Geeignete Ester der Acrylsäure aa) umfassen insbesondere Methylacrylat, Ethylacrylat, Propy-lacrylat, Isopropylacrylat, n-Butyl-acrylat, sec-Butylacrylat, tert-Butylacrylat, Pentylacrylat, Hexylacrylat, Heptylacrylat, Octylacrylat, 2-Octylacrylat, Ethylhexylacrylat, Nonylacrylat, 2-Methyl-octylacrylat, 2-tert.-Butylheptylacrylat, 3-iso-Propylheptylacrylat, Decylacrylat, Undecylacrylat, 5-Methylundecylacrylat, Dodecylacrylat, 2-Methyldodecylacrylat, Tride-cylacrylat, 5-Methyltridecylacrylat, Tetradecylacrylat, Pentadecylacrylat, Hexadecylacrylat, 2-Methylhexade-cylacrylat, Heptadecylacrylat, 5-iso-Propylheptadecylacrylat, 5-Ethyloctadecylacrylat, Octadecylacrylat, Nona-decylacrylat, Eicosylacrylat, Cycloalkylacry-late, wie beispielsweise Cyclopentylacrylat, Cyclohexylacrylat, 3-Vi-nyl-2-butylcyclohexylacrylat, Cycloheptylacrylat, Cyclooctylacrylat, Bornylacrylat, Tetrahydro-furfurylacrylat und Isobornylacrylat. Weitherin können die Acrylsäurederivate auch in Form der korrespondierenden Nitrile oder Amide eingesetzt werden, wie z.B. Acrylnitril oder Acrylamid. Außerdem besteht die Möglichkeit andere funktionelle Monomere in Abhängig-keit von der gewünschten Anwendung zu verwenden, wie z.B. Diacetonacrylamid oder Ace-toacetoxyethylacrylat. Bevorzugt sind Ethylacrylat, n-Butylacrylat, Ethylhexylacrylat, Cyc-lohexylacrylat, Acrylamid oder Acrylnitril, besonders bevorzugt sind Ethylacrylat, n-Butylacrylat oder Ethylhexylacrylat.
Geeignete Ester der Methacrylsäure ba) umfassen insbesondere Methylmethacrylat, Ethylmethacrylat, Propylme-thacrylat, Isopropylmethacrylat, n-Butylmethacrylat, sec-Butylmethacrylat, tert-Butylmethacrylat, Pentylmethacrylat,

Hexylmethacrylat, Heptylmethacrylat, Octylmethacrylat, 2-Octylmethacrylat, Ethylhexylmethacrylat, Nonylmethacrylat, 2-Methyloctylmethacrylat, 2-tert.-Butylheptylmethacrylat, 3-iso-.Propylheptylmethacrylat, Decylmethacrylat, Undecylmethacrylat, 5-Methylundecylmethacrylat, Dodecylmethacrylat, 2-Methyldodecylmethacrylat, Tridecylmethacrylat, 5-Methyltridecylmethacrylat, Tetradecylmethacrylat, Pentadecylmethacrylat, Hexadecylmethacrylat, 2-Methylhexadecylmethacrylat, Heptadecylmethacrylat, 5-iso-Propylheptadecylme-thacrylat, 5-Ethyloctadecylmethacrylat, Octadecylmethacrylat, Nonadecylmethacrylat, Eicosylmethacrylat, Cycloalkylmethacrylate, wie beispielsweise Cyclopentylmethacrylat, Cyclohexylmethacrylat, 3-Vinyl-2-butylcyclohexylmethacrylat, Cycloheptylmethacrylat, Cyclooctylmethacrylat, Bornylmethacrylat, Tetrahydrofurfurylmethacrylat und Isobornylmethacrylat. Weitherin können die Methacrylsäurederivate auch in Form der korrespondierenden Nitrile oder Amide eingesetzt werden, wie z.B. Methacrylnitril oder Methacrylamid. Außerdem besteht die Möglichkeit andere funktionelle Monomere in Abhängigkeit von der gewünschten Anwendung zu verwenden, wie beispielsweise Diacetonmethacrylamid oder Acetoacetoxyethylmethacrylat und 2-(Perflourhexyl)ethylmethacrylat. Bevorzugt sind Methylmethacrylat, Ethylmethacrylat, Butylmethacrylat, tert-Butylmethacrylat, Methacrylamid oder Methacrylnitril, besonders bevorzugt sind Methylmethacrylat, tert-Butylmethacrylat oder Butylmethacrylat.

Geeignete olefinisch ungesättigte, säurefunktionelle Monomere ca) sind sulfon-, phosphat- oder carbonsäurefunktionelle Monomere, bevorzugt sind ungesättigte carbonsäurefunktionelle Monomere wie Acrylsäure, Methacrylsäure, ß-Carboxyethylacrylat, Crotonsäure, Fumarsäure, Maleinsäureanhydrid, Itaconsäure oder Monoalkylester zweibasiger Säuren bzw. Anhydride wie z.B. Maleinsäure-monoalkylester. Ferner geeignet als Verbindungen der Komponente c) sind auch ungesättigte, radikalisch polymerisierbare Verbindungen mit Phosphat- bzw. Phosphonat- oder Sulfonsäure- bzw. Sulfonatgruppen, wie z.B. in der WO-A 00/39181 (S. 8, Z. 13 - S. 9, Z. 19) beschrieben werden. Besonders bevorzugt sind Acryl- oder Methacrylsäure, ganz besonders bevorzugt ist Acrylsäure.

Geeignete vinylaromatische Verbindungen da) sind beispielsweise Vinyltoluol, o- und p-Methylstyrol, Butylstyrol, 4-n-Butylstyrol, 4-n-Decylstyrol, halogenierte Styrole, wie beispielsweise Monochlorstyrole, Dichlorstyrole, Tribromstyrole oder Tetrabromstyrole. Bevorzugt ist Styrol.

Gegebenenfalls können auch hydroxyfunktionelle Monomere ea) verwendet werden. Geeignete Methacrylat-Verbindungen sind solche, die eine Hydroxyfunktion tragen. Dazu zählen beispielsweise Hydroxyethylmethacrylat, Hydroxypropylmethacrylat oder Hydroxybutylmethacrylat. Geeignete Verbindungen e) sind auch Acrylat-Verbindungen, die eine Hydroxyfunktion tragen, dazu zählen beispielsweise Hydroxyethylacrylat, Hydroxypropylacrylat oder Hydroxybutylacrylat.

Besonders bevorzugt werden Dispersionen verwendet, die neben verschiedenen (Meth)acrylaten (Komponente aa) und/ oder ba) und/ oder ea) unpolare Comonomere bevorzugt Styrol und/oder andere Vinylaromaten (Komponente da)), insbesondere Styrol, oder spezielle hydrophobe (Meth)Acrylate wie solche mit fluorierten Seitenketten enthalten.

Bevorzugte Styrolgehalte liegen im Bereich 20 bis 80 Gew.-%, besonders bevorzugt 40 bis 70 Gew.-%.

Bevorzugte Gehalte an teilweise fluorierten Comonomeren liegen im Bereich 0,1 bis 8 Gew.-%, besonders bevorzugt 0,2 bis 3 Gew.-%.

Die Herstellung der Polyacrylat-Dispersion kann auf an sich bekannte Weise, beispielsweise mittels Emulsionspolymerisation erfolgen. Zweckmäßigerweise erfolgt sie durch ein Zulauf-Verfahren, bei welchem zunächst Wasser, Emulgator und gegebenenfalls eine geringe Menge Initiator vorlegt wird. Dabei enthält die Vorlage bevorzugt 40 bis 80 Gew.-Teile Wasser, bezogen auf die gesamte Wassermenge, 0,1 bis 1,5 Gew.-Teile Emulgator, bezogen auf den Feststoff, und gegebenenfalls 0,01 bis 0,3 Gew.% Initiator, bezogen auf den Feststoff, wobei sich die angegebenen Gewichtsteile zu 100,00 Gewichtsteilen addieren. Anschließend erfolgt die Dosierung einer geringen Menge der Monomere, bevorzugt 5 bis 15 Gew.-%, gegebenenfalls erfolgt gleichzeitig die Dosierung des Initiators, bevorzugt 0,01 bis 0,3 Gew.-% zur Bildung einer internen Saat auf die die weiteren Polymerisationsschritte erfolgen.

Zu dieser internen Saat werden dann kontinuierlich die Monomere in den genannten Verhältnissen zugegeben und bis zu einem Umsatz von mindestens 95,0 Gew.-%, bevorzugt mindestens 98,0 Gew.-%, besonders bevorzugt mindestens 99,0 Gew.-%, ganz besonders bevorzugt mindestens 99,5 Gew.-%, jeweils bezogen auf ihr Gesamtgewicht, polymerisiert. Die Emulsionspolymerisation erfolgt in der Regel bei einer Temperatur von 30 bis 100 °C, bevorzugt von 50 bis 90 °C.

Die Stabilisierung der Dispersionen, die ein Acrylatpolymer enthalten, erfolgt unter anderem mittels ionischer und/oder nicht-ionischer Emulgatoren und/oder Schutzkolloiden. Als ionische Emulgatoren kommen in erster Linie anionische Emulgatoren in Frage. Es kann sich dabei um die Alkali- oder Ammoniumsalze von Alkyl-, Aryl-, oder Alkylarylsulfonaten, -phosphaten, -phosponaten oder Verbindungen mit anderen anionischen Endgruppen handeln, wobei sich auch Oligo- oder Polyethylenoxid-Einheiten zwischen dem Kohlenwasserstoffrestcund der anionischen Gruppe befinden können. Typische Beispiele sind Natriumlaurylsulfat, Natriumlauryldiglykolsulfat, Natriumdecylglykolethersulfat, Natriumoctylphenolglykolethersulfat oder Natriumdodecylbenolsulfat.

Als nicht-ionische Emulgatoren werden üblicherweise Alkylpolyglykolether, wie Ethoxilierungsprodukte von Lauryl-, Oleyl- oder Stearylalkohol oder von Gemsichen wie Kokosfettalkohol. Ebenfalls geeignet sind Alkylphenolpolyglykolether, wie Ethoxilierungsprodukte von Octyl- oder Nonylphenol, Diisopropylphenolm, Triisopropylphenol, Di- oder

Tri-tert-butylphenol. Neben den genannten Verbindungsklassen können auch Ethoxilierungsprodukte vom Propylenoxid eingesetzt werden.

Als geeignete Schutzkolloide verwendet man Naturstoffe wie Gummi arabicum, Stärke, Alginate oder modifizierte Naturstoffe wie Methyl-, Ethyl-, Hydroxyalkyl- oder Carboxymethylcellulose oder synthetische Substanzen, wie Polyvinylalkohol oder modifzierte Polyvinylalkohole oder Polyvinylpyrrolidone.

Die Emulgatoren können durch eine entsprechende Funktionalisierung auch so modifiziert sein, dass sie mit den Monomeren radikalisch copolymerisieren (Surfmer).

Es ist weiterhin möglich auch Gemische der genannten Emulgatoren zu verwenden.

Bevorzugt wird als Emulgator ein Alkylpolyethersulfat, wie z.B. das Ammoniumsalz vom Alkylpolyglykolethersulfat (erhältlich unter der Bezeichnung Emulgator Tanemul 951 von der Firma Tanatex, DE) eingesetzt. Die Gesamtmenge an Emulgator beträgt bezogen auf den Feststoff 0,3 bis 1,5 Gew.%, bevorzugt 0,3 bis 1,0 Gew.-%.

Zusammensetzung der Polychloropren-Dispersionen

Die Polychloroprenherstellung ist seit langem bekannt, sie erfolgt durch Emulsionspolymerisation im alkalischen wäßrigen Medium, vgl. z. B. "Methoden der Organischen Chemie" (Houben-Weyl) XIV/1, 738 f. Georg Thieme Verlag Stuttgart 1961.

Die Herstellung von Polychloropren-Dispersionen ist an sich ebenfalls bekannt. Entsprechende Dispersionen werden beispielsweise durch Emulsionspolymerisation von Chloropren (2-Chlor-1,3-butadien) und gegebenenfalls eines mit Chloropren copolymerisierbaren ethylenisch ungesättigten Monomeren in alkalischem Medium hergestellt, wie z.B. in WO02/24825 (S. 3, Z. 26- S. 7, Z. 4), DE-A 3 002 734 (S. 8, Z. 23- S. 12, Z. 9), WO2005035683(A1) (S.16 ff.) oder US-A 5 773 544 (Sp. 2, Z. 9 bis Sp. 4, Z. 45) beschrieben.

Geeignete copolymerisierbare Monomere werden z. B. beschrieben in "Methoden der Organischen Chemie" (Houben-Weyl) XIV/1, 738 f. Georg Thieme Verlag Stuttgart 1961. Bevorzugt sind Verbindungen mit 3 bis 12 C-Atomen und 1 oder 2 copolymerisierbaren C=C-Doppelbindungen pro Molekül. Beispiele bevorzugter copolymerisierbarer Monomere sind 2,3-Dichlorbutadienund 1-Chlorbutadien.

Als Emulgatoren kommen prinzipiell alle Verbindungen und deren Mischungen in Betracht, die die Emulsion hinreichend stabilisieren, wie z.B. die wasserlöslichen Salze, insbesondere die Natrium-, Kalium- und Ammoniumsalze von langkettigen Fettsäuren, Kolophonium und Kolophoniumderivate, höhermolekulare Alkoholsulfate, Arylsulfonsäuren, Formaldehydkondensate von Arylsulfonsäuren, nichtionische Emulgatoren auf Polyethylenoxid- und Polypropylenoxidbasis sowie emulgierend wirkende Polymere wie Polyvinylalkohol.

Bevorzugt sind solche Chloropren-Dispersionen, die stabil gegenüber HCl-Abspaltung sind. Dies trifft besonders auf solche wässrige Polychloropren-Dispersion zu, die sich durch eine lange Lagerbeständigkeit auszeichnen, d.h. deren pH-Wert im Alkalischen liegt ($pH \geq 8$) und sich während der Lagerzeit nicht signifikant ändert. Die Herstellung solcher Dispersionen ist in WO2005035683(A1) (S.16 ff.) ausführlich beschrieben. Die erfindungsgemäß einzusetzende Polychloropren-Dispersion wird durch Emulsionspolymerisation bei 0 bis 70°C, vorzugsweise bei 5 bis 45 °C und bevorzugten pH-Werten von 10 bis 14 hergestellt.

Die Aktivierung erfolgt durch die üblichen Aktivatoren bzw. Aktivatorsysteme. Als Beispiele für Aktivatoren bzw. Aktivatorsysteme seien genannt: Formamidinsulfinsäure, Kaliumperoxodisulfat, Redoxsysteme auf Basis von Kaliumperoxodisulfat und gegebenenfalls Silbersalz (Na-Salz der Anthrachinon-β-sulfonsäure) wobei beispielsweise Verbindungen wie Formamidinsulfinsäure, das Na-Salz der Hydroxymethansulfinsäure, Natriumsulfit und Natriumdithionit als Redoxpartner dienen. Auch Redoxsysteme auf Basis von Peroxiden und Hydroperoxiden sind geeignet. Die Herstellung der erfindungsgemäßen Polychloroprene kann sowohl kontinuierlich als auch diskontinuierlich erfolgen, wobei die kontinuierliche Polymerisation bevorzugt ist.

Zur Viskositätseinstellung der erfindungsgemäßen Polychloroprene können übliche Kettenübertragungsmittel wie Mercaptane oder wie Xanthogendisulfide verwendet werden. Besonders bevorzugte Kettenübertragungsmittel sind n-Dodecylmercaptan und die gemäß DE-A 3 044 811, DE-A 2 306 610 und DE-A 2 156 453 verwendeten Xanthogendisulfide.

Bevorzugt werden monomerenarme oder -freie Dispersionen eingesetzt. Nach der Polymerisation kann das restliche Chloropren Monomer beispielsweise durch eine Wasserdampfdestillation entfernt werden.

Ebenfalls bevorzugt werden Chloropren-Dispersionen mit erhöhtem Feststoffgehalt eingesetzt. Der Feststoffgehalt der Dispersion kann durch einen Aufrahmprozess erhöht werden wie in WO2005035683(A1) (S.16 ff.) und den dort angegebenen Zitaten beschrieben. Bevorzugt sind Feststoffgehalte von 40 - 64 Gew.-%, besonders bevorzugt auf 52 - 59 Gew.-%.

Vorzugsweise hat die Polychloropren Dispersion einen Partikeldurchmessser von 60 bis 200 nm, besonders bevorzugt von 60 bis 150 nm, ganz besonders bevorzugt von 60 bis 120 nm.

Neben den Polychloropren-Partikeln können weitere Polymerteilchen wie Polyacrylat-, Styrol-Butadien-, Acrylnitril-butadien-, Polyurethan- und/oder Polyvinylacetat-Partikel enthalten sein.

Für die erfindungsgemäße Anwendung als Schutzschicht ist der Einsatz von Dispersionen gegenüber lösungsmittelbasierten und lösungsmittelfreien Systemen bevorzugt. Besonders bevorzugt werden Polyurethan-Dispersionen und PolyacrylatDisperionen mit Styrol oder fluorierten (Meth)acrylaten als Copolymer eingesetzt.

Die zur Herstellung der Schutzschicht verwendbaren Zusammensetzungen können neben den Polymer-Dispersionen zusätzlich auch Hilfs- und Zusatzstoffe enthalten, um gleichmäßige Oberflächen, spezielles Benetzungsverhalten oder spezielle Schichtdicken zu erzielen. Beispiele für solche Hilfs- und Zusatzstoffe sind Vernetzer, Verdicker, Colösemittel, Thixotropiermittel, Stabilisatoren, Antioxidantien, Lichtschutzmittel, Emulgatoren, Tenside, Weichmacher, Pigmente, Füllstoffe und Verlaufshilfsmittel, die in der Lackindustrie hinreichend bekannt sind.

Der Auftrag Zusammensetzungen kann mit Hilfe aller an sich bekannter Applikationsformen erfolgen, genannt seien beispielsweise Rakeln, Streichen, Gießen oder Sprühen. Die Verarbeitung der einzelnen Schichten erfolgt durch Gießen oder händisches bzw. maschinell durchgeführtes Rakeln; auch Drucken, Siebdrucken und Spritzen bzw. Sprühen und Tauchen sind mögliche Verarbeitungstechniken. Generell sind alle Techniken denkbar, die bei einer Auftragung von dünnen Schichten - z.B. bei einer Lackierungen - eingesetzt werden können, denkbar.

Ein mehrschichtiger Auftrag mit gegebenenfalls zwischengelagerten Trocknungsschritten ist grundsätzlich auch möglich.

Für eine schnellere Trocknung werden bevorzugt Temperaturen oberhalb von 30°C benutzt. Bevorzugt werden Temperaturen zwischen 30 und 140 °C. Die Trocknung erfolgt in der Regel unter Verwendung von an sich bekannten Heiz- und Trockenapparaten, wie (Umluft-) Trockenschränken, Heißluft oder IR-Strahlern. Auch die Trocknung durch Führen des beschichteten Substrates über geheizte Oberflächen, z.B. Walzen, ist möglich. Der Auftrag sowie die Trocknung können jeweils diskontinuierlich oder kontinuierlich durchgeführt werden, bevorzugt ist jedoch ein gänzlich kontinuierliches Verfahren.

Der erfindungsgemäße Medium kann weitere Schichten aufweisen. Diese können mit dem Photopolymerfilm und / oder der Schutzschicht abschnittsweise oder vollflächig verbunden sein.

Ein weiterer Gegenstand der Erfindung ist die Verwendung eines erfindungsgemäßen holografisches Mediums zur Herstellung von Hologrammen, insbesondere zur Herstellung von In-Line Hologrammen, Off-Axis Hologrammen, Full-Aperture Transfer Hologrammen, Weißlicht-Transmissionshologrammen, Denisyukhologrammen, Off-Axis Reflektionshologrammen, Edge-Lit Hologrammen sowie holographischen Stereogrammen.

Ebenfalls Gegenstand der Erfindung ist ein Verfahren zur Herstellung eines erfindungsgemäßen holografischen Mediums, bei dem ein Photopolymerfilm aus einer Formulierung enthaltend Polyisocyanate, Polyole, Acrylat-Schreibmonomere und Photoinitiatoren hergestellt und auf den Photopolymerfilm eine Schutzschicht aufgebracht wird, wobei die Schutzschicht für die Bestandteile des Photopolymerfilms undurchlässig, optisch klar und für elektromagnetische Strahlung mit einer Wellenlänge im Bereich von 350 bis 800 nm transparent ausgebildet ist.

Die Erfindung wird im Folgenden anhand von Beispielen näher erläutert.

## Beispiele

Messmethoden:

Die angegebenen OH-Zahlen wurden gemäß DIN 53240-2 bestimmt.

Die angegebenen NCO-Werte (Isocyanat-Gehalte) wurden gemäß DIN EN ISO 11909 bestimmt.

Die angegebenen Aminzahlen wurden durch die Currenta GmbH & Co. OHG, Leverkusen, Deutschland, mit der Prüfmethode AFAM 2011-0605401-05 D analog zur DIN 16945, Abschnitt 5.6, wobei in Abänderung zur DIN die Perchlorsäure-Lösung gekauft wird und der Endpunkt potentiometrisch bestimmt wird, bestimmt.

### Festkörpergehalt

Von einem unlackierten Dosendeckel und einer Büroklammer wurde das Tara-Gewicht ermittelt. Dann wurden ca. 1g der zu untersuchenden Probe nach der Einwaage in dem Dosendeckel mit der geeignet gebogenen Büroklammer gleichmäßig verteilt. Die Büroklammer verblieb zur Messung in der Probe. Die Einwaage wurde ermittelt, danach für 1 Stunde bei 125 °C in einen Laborofen erhitzt und anschließend die Auswaage bestimmt. Den Festkörpergehalt wurde gemäß folgender Gleichung bestimmt: Auswaage [g] * 100 / Einwaage [g] = Gew.-% Festkörper.

Die angegebenen Viskositäten wurden nach DIN EN ISO 3219/A.3 bei 23°C und einer Scherrate von $40 s^{-1}$ bestimmt.

### Messung der Trockenschichtdicke der Photopolymere

Die physikalische Schichtdicke wurde mit marktgängigen Weisslichtinterferometern ermittelt, wie z.B. das Gerät FTM-Lite NIR Schichtdickenmessgerät der Firma Ingenieursbüro Fuchs.

Die Bestimmung der Schichtdicke beruht im Prinzip auf Interferenzerscheinungen an dünnen Schichten. Dabei überlagern sich Lichtwellen, die an zwei Grenzflächen unterschiedlicher optischer Dichte reflektiert worden sind. Die ungestörte Überlagerung der reflektierten Teilstrahlen führt nun zur periodischen Aufhellung und Auslöschung im Spektrum eines weißen Kontinuumstrahlers (z.B. Halogenlampe). Diese Überlagerung nennt der Fachmann Interferenz. Diese Interferenzspektren werden gemessen und mathematisch ausgewertet.

**Messung der holographischen Eigenschaften DE und $\Delta n$ der holographischen Medien mittels Zweistrahlinterferenz in Reflexionsanordnung**

Die wie unten beschrieben hergestellten holographischen Medien wurden anschließend mittels einer Messanordnung gemäß Figur 1 wie folgt auf ihre holographischen Eigenschaften geprüft:

Der Strahl eines He-Ne Lasers (Emissionswellenlänge 633 nm) wurde mit Hilfe des Raumfilter (SF) und zusammen mit der Kollimationslinse (CL) in einen parallelen homogenen Strahl umgewandelt. Die finalen Querschnitte des Signal und Referenzstrahls werden durch die Irisblenden (I) festgelegt. Der Durchmesser der Irisblendenöffnung beträgt 0,4 cm. Die polarisationsabhängigen Strahlteiler (PBS) teilen den Laserstrahl in zwei kohärente gleich polarisierte Strahlen. Über die $\lambda/2$ Plättchen wurden die Leistung des Referenzstrahls auf 0,5 mW und die Leistung des Signalstrahls auf 0,65 mW eingestellt. Die Leistungen wurden mit den Halbleiterdetektoren (D) bei ausgebauter Probe bestimmt. Der Einfallswinkel ($\alpha_0$) des Referenzstrahls beträgt -21.8°, der Einfallswinkel ($\beta_0$) des Signalstrahls beträgt 41.8°. Die Winkel werden ausgehend von der Probennormale zur Strahlrichtung gemessen. Gemäß Figur 1 hat daher $\alpha_0$ ein negatives Vorzeichen und $\beta_0$ ein positives Vorzeichen. Am Ort der Probe (Medium) erzeugte das Interferenzfeld der zwei überlappenden Strahlen ein Gitter heller und dunkler Streifen die senkrecht zur Winkelhalbierenden der zwei auf die Probe einfallenden Strahlen liegen (Reflexionshologramm). Der Streifenabstand A, auch Gitterperiode genannt, im Medium beträgt - 225 nm (der Brechungsindex des Mediums zu ~1.504 angenommen).

Figur 1 zeigt die Geometrie eines Holographic Media Testers (HMT) bei $\lambda$ = 633 nm (He-Ne Laser): M = Spiegel, S = Verschluss, SF = Raumfilter, CL = Kollimatorlinse, $\lambda/2$ = $\lambda/2$ Platte, PBS = polarisationsempfindlicher Strahlteiler, D = Detektor, I = Irisblende, $\alpha_0$ = - 21.8°, $\beta_0$ = 41.8° sind die Einfallswinkel der kohärenten Strahlen außerhalb der Probe (des Mediums) gemessen. RD = Referenzrichtung des Drehtisches.

Es wurden auf folgende Weise Hologramme in das Medium geschrieben:

- Beide Shutter (S) sind für die Belichtungszeit *t* geöffnet.
- Danach wurde bei geschlossenen Shuttern (S) dem Medium 5 Minuten Zeit für die Diffusion der noch nicht polymerisierten Schreibmonomere gelassen.

Die geschriebenen Hologramme wurden nun auf folgende Weise ausgelesen. Der Shutter des Signalstrahls blieb geschlossen. Der Shutter des Referenzstrahls war geöffnet. Die Irisblende des Referenzstrahls wurde auf einen Durchmesser < 1 mm geschlossen. Damit erreichte man, dass für alle Drehwinkel ($\Omega$) des Mediums der Strahl immer vollständig im zuvor geschriebenen Hologramm lag. Der Drehtisch überstrich nun computergesteuert den Winkelbereich von $\Omega_{min}$ bis $\Omega_{max}$ mit einer Winkelschrittweite von 0,05°. $\Omega$ wird von der Probennormale zur Referenzrichtung des Drehtisches gemessen. Die Referenzrichtung des Drehtisches ergibt sich dann wenn beim Schreiben des Hologramms der Einfallswinkel des Referenz- und des Signalstrahls betragsmäßig gleich sind also $\alpha_0$ = -31.8° und $\beta_0$ = 31.8° gilt. Dann beträgt $\Omega_{recording}$ = 0°. Für $\alpha_0$ = -21.8° und $\beta_0$ = 41.8° beträgt $\Omega_{recording}$ daher 10°. Allgemein gilt für das Interferenzfeld beim Schreiben ("recording") des Hologramms:

$$\alpha_0 = \theta_0 + \Omega_{recording}.$$

$\theta_0$ ist der Halbwinkel im Laborsystem außerhalb des Mediums und es gilt beim Schreiben des Hologramms:

$$\theta_0 = \frac{\alpha_0 - \beta_0}{2}.$$

In diesem Fall gilt also $\theta_0$ = -31.8°. An jedem angefahrenen Drehwinkel $\Omega$ wurden die Leistungen des in der nullten Ordnung transmittierten Strahls mittels des entsprechenden Detektors D und die Leistungen des in die erste Ordnung abgebeugten Strahls mittels des Detektors D gemessen. Die Beugungseffizienz ergab sich bei jedem angefahrenen Winkel $\Omega$ als der Quotient aus:

$$\eta = \frac{P_D}{P_D + P_T}$$

$P_D$ ist die Leistung im Detektor des abgebeugten Strahls und $P_T$ ist die Leistung im Detektor des transmittierten Strahls.

Mittels des oben beschriebenen Verfahrens wurde die Braggkurve, sie beschreibt den Beugungswirkungsgrad $\eta$ in Abhängigkeit des Drehwinkels $\Omega$ des geschriebenen Hologramms gemessen und in einem Computer gespeichert. Zusätzlich wurde auch die in die nullte Ordnung transmittierte Intensität gegen den Drehwinkel $\Omega$ aufgezeichnet und in einem Computer gespeichert.

Die maximale Beugungseffizienz (DE = $\eta_{max}$) des Hologramms, also sein Spitzenwert, wurde bei $\Omega_{reconstruction}$ ermittelt. Eventuell musste dazu die Position des Detektors des abgebeugten Strahls verändert werden, um diesen maximalen Wert zu bestimmen.

Der Brechungsindexkontrast $\Delta n$ und die Dicke d der Photopolymerschicht wurde nun mittels der Coupled Wave Theorie (siehe; H. Kogelnik, The Bell System Technical Journal, Volume 48, November 1969, Number 9 Seite 2909 - Seite 2947) an die gemessene Braggkurve und den Winkelverlauf der transmittierten Intensität ermittelt. Dabei ist zu beachten, dass wegen der durch die Photopolymerisation auftretenden Dickenschwindung der Streifenabstand Λ' des Hologramms und die Orientierung der Streifen (slant) vom Streifenabstand Λ des Interferenzmusters und dessen Orientierung abweichen kann. Demnach wird auch der Winkel $\alpha_0$' bzw. der entsprechende Winkel des Drehtisches $\Omega_{reconstruction}$, bei dem maximale Beugungseffizienz erreicht wird von $\alpha_0$ bzw. vom entsprechenden $\Omega_{recording}$ abweichen. Dadurch verändert sich die Bragg-Bedingung. Diese Veränderung wird im Auswerteverfahren berücksichtigt. Das Auswerteverfahren wird im Folgenden beschrieben:

Alle geometrischen Größen, die sich auf das geschriebene Hologramm beziehen und nicht auf das Interferenzmuster werden als gestrichene Größen dargestellt.

Für die Braggkurve $\eta(\Omega)$ eines Reflexionshologramms gilt nach Kogelnik:

$$\eta = \begin{cases} \dfrac{1}{1 - \dfrac{1-(\xi/\nu)^2}{\sin^2\left(\sqrt{\xi^2 - \nu^2}\right)}}, \text{für } \nu^2 - \xi^2 < 0 \\ \dfrac{1}{1 + \dfrac{1-(\xi/\nu)^2}{\sinh^2\left(\sqrt{\nu^2 - \xi^2}\right)}}, \text{für } \nu^2 - \xi^2 \geq 0 \end{cases}$$

mit:

$$\nu = \frac{\pi \cdot \Delta n \cdot d'}{\lambda \cdot \sqrt{|c_s \cdot c_r|}}$$

$$\xi = -\frac{d'}{2 \cdot c_s} \cdot DP$$

$$c_s = \cos(\vartheta') - \cos(\psi') \cdot \frac{\lambda}{n \cdot \Lambda'}$$

$$c_r = \cos(\vartheta')$$

$$DP = \frac{\pi}{\Lambda'} \cdot \left( 2 \cdot \cos(\psi' - \vartheta') - \frac{\lambda}{n \cdot \Lambda'} \right)$$

$$\psi' = \frac{\beta' + \alpha'}{2}$$

$$\Lambda' = \frac{\lambda}{2 \cdot n \cdot \cos(\psi' - \alpha')}$$

Beim Auslesen des Hologramms ("reconstruction") gilt wie analog oben dargestellt:

$$\vartheta'_0 = \theta_0 + \Omega$$

$$\sin(\vartheta'_0) = n \cdot \sin(\vartheta')$$

An der Bragg-Bedingung ist das "Dephasing" DP = 0. Und es folgt entsprechend:

$$\alpha'_0 = \theta_0 + \Omega_{reconstruction}$$

$$\sin(\alpha'_0) = n \cdot \sin(\alpha')$$

Der noch unbekannt Winkel $\beta'$ kann aus dem Vergleich der Bragg-Bedingung des Interferenzfeldes beim Schreiben des Hologramms und der Bragg-Bedingung beim Auslesen des Hologramms ermittelt werden unter der Annahme, dass nur Dickenschwindung stattfindet. Dann folgt:

$$\sin(\beta') = \frac{1}{n} \cdot \left[ \sin(\alpha_0) + \sin(\beta_0) - \sin(\theta_0 + \Omega_{reconstruction}) \right]$$

v ist die Gitterstärke, $\xi$ ist der Detuning Parameter und $\Psi'$ die Orientierung (Slant) des Brechungsindexgitters das geschrieben wurde. $\alpha'$ und $\beta'$ entsprechen den Winkeln $\alpha_0$ und $\beta_0$ des Interferenzfeldes beim Schreiben des Hologramms, aber im Medium gemessen und für das Gitter des Hologramms gültig (nach Dickenschwindung). n ist der mittlere Brechungsindex des Photopolymers und wurde zu 1.504 gesetzt. $\lambda$ ist die Wellenlänge des Laserlichts im Vakuum.

Die maximale Beugungseffizienz (DE = $\eta_{max}$) ergibt sich dann für $\xi$ = 0 zu:

$$DE = \tanh^2(\nu) = \tanh^2\left( \frac{\pi \cdot \Delta n \cdot d'}{\lambda \cdot \sqrt{\cos(\alpha') \cdot \cos(\alpha' - 2\psi)}} \right)$$

Die Messdaten der Beugungseffizienz, die theoretische Braggkurve und die transmittierte Intensität werden wie in Figur 2 gezeigt gegen den zentrierten Drehwinkel $\Delta\Omega \equiv \Omega_{reconstruction} - \Omega = \alpha'_0 - \vartheta'_0$, auch Winkeldetuning genannt, aufgetragen.

Da DE bekannt ist wird die Form der theoretischen Braggkurve nach Kogelnik nur noch durch die Dicke d' der Photopolymerschicht bestimmt. $\Delta n$ wird über DE für gegebene Dicke *d'* so nachkorrigiert, dass Messung und Theorie von DE immer übereinstimmen. *d'* wird nun solange angepasst bis die Winkelpositionen der ersten Nebenminima der theoretischen Braggkurve mit den Winkelpositionen der ersten Nebenmaxima der transmittierten Intensität übereinstimmen und zudem die volle Breite bei halber Höhe (FWHM) für die theoretische Braggkurve und für die transmittierte Intensität übereinstimmen.

Da die Richtung in der ein Reflexionshologramm bei der Rekonstruktion mittels eines Ω-Scans mitrotiert, der Detektor für das abgebeugte Licht aber nur einen endlichen Winkelbereich erfassen kann, wird die Braggkurve von breiten Hologrammen (kleines *d'*) bei einem Ω-Scan nicht vollständig erfasst, sondern nur der zentrale Bereich, bei geeigneter Detektorpositionierung. Daher wird die zur Braggkurve komplementäre Form der transmittierten Intensität zur Anpassung der Schichtdicke *d'* zusätzlich herangezogen.

Figur 2 zeigt die gemessene transmittierte Leistung $P_T$ (rechte *y*-Achse) als durchgezogene Linie gegen das Winkeldetuning $\Delta\Omega$ aufgetragen, die gemessene Beugungseffizienz $\eta$ (linke *y*-Achse) als ausgefüllte Kreise gegen das Winkeldetuning $\Delta\Omega$ aufgetragen (soweit die endliche Größe des Detektors es erlaubte) und die Anpassung der Kogelnik Theorie als gestrichelte Linie (linke *y*-Achse).

Für eine Formulierung wurde diese Prozedur eventuell mehrfach für verschiedene Belichtungszeiten t an verschiedenen Medien wiederholt, um festzustellen bei welcher mittleren Energiedosis des einfallenden Laserstrahls beim Schreiben des Hologramms DE in den Sättigungswert übergeht. Die mittlere Energiedosis *E* ergibt sich wie folgt aus den Leistungen der zwei den Winkeln $\alpha_0$ und $\beta_0$ zugeordneten Teilstrahlen (Referenzstrahl mit $P_r$ = 0,50 mW und Signalstrahl mit $P_s$ = 0,63 mW), der Belichtungszeit t und dem Durchmesser der Irisblende (0,4 cm):

$$E\,(\mathrm{mJ/cm^2}) = \frac{2\cdot\left[P_r + P_s\right]\cdot t\,(\mathrm{s})}{\pi\cdot 0.4^2\ \mathrm{cm}^2}$$

Die Leistungen der Teilstrahlen wurden so angepasst, dass in dem Medium bei den verwendeten Winkeln $\alpha_0$ und $\beta_0$, die gleiche Leistungsdichte erreicht wird.

Als Alternative I wurde auch ein dem in Abbildung 1 dargestellten Aufbau äquivalenter Test mit einem grünen Laser mit der Emissionswellenlänge $\lambda$ im Vakuum von 532 nm durchgeführt. Dabei beträgt $\alpha_0$ = -11.5° und $\beta_0$ = 33.5° und $P_r$ = 1.84 mW und $P_s$ = 2.16 mW.

In Beispielen wird jeweils der maximale Wert in $\Delta n$ berichtet, die verwendeten Dosen liegen zwischen 4 und 64 $mJ/cm^2$ pro Arm.

Erzeugen von Testhologrammen in den holographischen Medien mittels Zweistrahlinterferenz in Denisyuksanordnung:

Die wie im Abschnitt "Herstellung der holographischen Medien basierend auf Photopolymerformulierung mit Photoinitiator zur Bestimmung der holographischen Performance" beschrieben hergestellten Medien wurden anschließend mittels einer Messanordnung gemäß Figur 3 wie folgt auf ihre holographischen Eigenschaften geprüft:

Der Strahl eines Lasers (Emissionswellenlänge 633 nm oder 532 nm) wird mit Hilfe einer optionalen Aufweitungslinse (AF) und der Kollimationslinse (CL), die nach dem Shutter S platziert ist auf einen Durchmesser vorn ~ 3 - 4 cm aufgeweitet. Der Durchmesser des aufgeweiteten Laserstrahls wird dabei durch die Apertur des geöffneten Shutters bestimmt. Es wird bewusst auf eine inhomogene Intensitätsverteilung des aufgeweiteten Laserstrahles geachtet. So beträgt die Randintensität $P_R$ ~ nur die Hälfte der Intensität $P_Z$ im Zentrum des aufgeweiteten Laserstrahls. P ist hier als Leistung/ Fläche zu verstehen. Der aufgeweitete Laserstrahl durchläuft zunächst eine schräg zum Strahl gestellte Glasplatte, die als Shearing Plate (SP) dient. Anhand des nach oben gespiegelten Interferenzmusters, das von den zwei Glasoberflächenreflexen der SP erzeugt wird, kann erkannt werden, ob der Laser stabil im Single Mode emittiert. Dann ist auf einer über der SP platziert Mattscheibe aus dunklen und hellen Streifen zu sehen. Nur wenn Single Mode Emission gegeben ist werden holographischen Belichtungen durchgeführt. Im Falle der DPSS Laser kann der Single Mode durch einstellen des Pumpstroms erreicht werden. Der aufgeweitete Strahl durchläuft das etwa 15° schräg gestellte holographische Medium (P), dieser Teil bildet den Referenzstrahl, um dann vom zu P parallel angeordneten Objekt (O) wieder zurück in P reflektiert zu werden. Dieser Teil bildet dann den Signalstrahl der Denisyukanordnung.

Die Interferenz von Signal- und Referenzstrahl in P erzeugt das Hologramm im holographischen Medium. O besteht aus einer mit weißem Papier bedeckten Metallplatte, wobei die Papierseite P zugewandt ist. Auf dem Papier befindet sich ein quadratisches Raster erzeugt durch schwarze Linien. Die Kantenlänge eines Quadrates beträgt 0.5 cm. Dieses Raster wird bei der holographischen Belichtung von P mit im Hologramm abgebildet.

Die mittlere Belichtungsdosis $E_{ave}$ wird durch die Öffnungszeit *t* von S eingestellt. Bei fixierter Laserleistung *I* stellt *t* daher die zu $E_{ave}$ proportionale Größe dar. Da der aufgeweitete Laserstrahl eine inhomogenene (glockenförmige) Intensitätsverteilung besitzt variiert die lokale Dosis *E* zur Erzeugung des Hologramms in P. Dies führt, zusammen mit der Schrägstellung von P und O zur optischen Achse dazu, dass das geschriebene Hologramm elliptische Form besitzt, wie in Figur 4 dargestellt.

Da es sich bei O um einen diffusen Reflektor handelt ist das Hologramm durch Beleuchten mit einer Punktlichtquelle (z. B. Taschenlampe oder LED-Leuchte) leicht zu rekonstruieren.

**Einsatzstoffe für die Photopolymere 1, 2 und 3:**

Polymermatrix 1: bestehend aus Desmodur® XP 2599 (Komponente A1), ein Produkt der Bayer MaterialScience AG, Leverkusen, DE, Vollallophanat von Hexandiisocyanat auf Polypropylenglycol der zahlenmittleren Molmasse 2000, NCO-Gehalt: 5,6 - 6,4 % und difunktionelles Polypropylenglykol der zahlenmittleren Molmasse 4000 (Komponente B1).
Polymermatrix 2: bestehend aus Desmodur® N 3900 (Komponente A2), Produkt der Bayer MaterialScience AG, Leverkusen, Deutschland, Hexandiisocyanat-basiertes Polyisocyanat, Anteil an Iminooxadiazindion mindestens 30 %, NCO-Gehalt: 23,5 %, und Polyol 1 (Komponente B2).
Polyol 1 ist ein experimentelles Produkt der Bayer MaterialScience AG, Leverkusen, Deutschland, die Herstellung ist unten beschrieben.
Schreibmonomer 1 ist ein experimentelles Produkt der Bayer MaterialScience AG, Leverkusen, Deutschland, die Herstellung ist unten beschrieben.
Schreibmonomer 2 ist ein experimentelles Produkt der Bayer MaterialScience AG, Leverkusen, Deutschland, die Herstellung ist unten beschrieben.
Additiv 1 ist ein experimentelles Produkt der Bayer MaterialScience AG, Leverkusen, Deutschland, die Herstellung ist unten beschrieben.
Photoinitiator 1: Neumethylenblau 0,05 %, Ethylviolet 0,05 % und Astrazon Orange G 0,05% mit CGI 909 (Produkt der BASF SE, Basel, Schweiz) 1,5%, als Lösung in N-Ethylpyrrolidon (NEP) gelöst, Anteil NEP 3,5%.
Photoinitiator 2: Neumethylenblau 0,20 %, Safranin O 0,10 % und Astrazon Orange G 0,10% mit CGI 909 (Produkt der BASF SE, Basel, Schweiz) 1,5%, als Lösung in N-Ethylpyrrolidon (NEP) gelöst, Anteil NEP 3,5%.
Katalysator 1: Fomrez® UL28 0,5%, Urethanisierungskatalysator, Dimethylbis[(1-oxoneodecl)oxy]stannan, Produkt der Momentive Performance Chemicals, Wilton, CT, USA (als 10%ige Lösung in N-Ethylpyrrolidon eingesetzt)
Byk® 310 (silikonbasiertes Oberflächenadditiv der BYK-Chemie GmbH, Wesel, 25%ige Lösung in Xylol) 0,3%.
Substrat 1: Makrofol DE 1-1 CC 175 µm (Bayer MaterialScience AG, Leverkusen, Deutschland).
Substrat 2: Polyethylenterephthalat-Folie, 36 µm, Typ Hostaphan® RNK, von Mitsubishi Chemicals, Deutschland.

Herstellung von Polyol 1:

In einem 1 L Kolben wurden 0,18 g Zinnoktoat, 374.8 g ε-Caprolacton und 374.8 g eines difunktionellen Polytetrahydrofuranpolyetherpolyols (Equivalentgewicht 500 g/Mol OH) vorgelegt und auf 120 °C aufgeheizt und so lange auf dieser Temperatur gehalten, bis der Festgehalt (Anteil der nicht-flüchtigen Bestandteile) bei 99.5 Gew.-% oder darüber lag. Anschließend wurde abgekühlt und das Produkt als wachsiger Feststoff erhalten.
Herstellung von Schreibmonomer 1 (Phosphorthioyltris(oxy-4,1-phenylenimino-carbonyloxyethan-2,1-diyl)-triacrylat):
In einem 500 mL Rundkolben wurden 0,1 g 2,6-Di-tert.-butyl-4-methylphenol, 0,05 g Dibutylzinn-dilaurat (Desmorapid® Z, Bayer MaterialScience AG, Leverkusen, Deutschland) sowie und 213.07 g einer 27 %-igen Lösung von Tris(p-isocyanatophenyl)thiophosphat in Ethylacetat (Desmodur® RFE, Produkt der Bayer MaterialScience AG, Leverkusen, Deutschland) vorgelegt und auf 60 °C erwärmt. Anschließend wurden 42.37 g 2-Hydroxyethylacrylat zugetropft und die Mischung weiter auf 60 °C gehalten, bis der Isocyanatgehalt unter 0,1 % gesunken war. Danach wurde abgekühlt und im Vakuum das Ethylacetat vollständig entfernt. Das Produkt wurde als teilkristalliner Feststoff erhalten.
Herstellung von Schreibmonomer 2 (2-({[3-(Methylsulfanyl)phenyl]carbamoyl} oxy)ethylprop-2-enoat):
In einem 100 mL Rundkolben wurden 0,02 g 2,6-Di-tert.-butyl-4-methylphenol, 0,01 g Desmorapid® Z, 11.7 g 3-(Methylthio)phenylisocyanat vorgelegt und vorgelegt und auf 60 °C erwärmt. Anschließend wurden 8.2 g 2-Hydroxyethylacrylat zugetropft und die Mischung weiter auf 60 °C gehalten, bis der Isocyanatgehalt unter 0,1 % gesunken war. Danach wurde abgekühlt. Das Produkt wurde als hellgelbe Flüssigkeit erhalten.
Herstellung des Additives 1 (Bis(2,2,3,3,4,4,5,5,6,6,7,7-dodecafluorheptyl)-(2,2,4-trimethylhexan-1,6-diyl)biscarbamat):

In einem 2000 mL Rundkolben wurden 0,02 g Desmorapid® Z und 3,60 g 2,4,4-Trimethylhexane-1,6-diisocyanat (TMDI) vorgelegt und auf 70 °C erwärmt. Anschließend wurden 11,39 g 2,2,3,3,4,4,5,5,6,6,7,7-Dodecafluorheptan-1-ol zugetropft und die Mischung weiter auf 70 °C gehalten, bis der Isocyanatgehalt unter 0,1 % gesunken war. Danach wurde abgekühlt. Das Produkt wurde als farbloses Öl erhalten.

**Herstellung der Photopolymerfilme:**

Photopolymer 1:

27,83 g Komponente B1 wurden schrittweise mit 13,75 g Schreibmonomer 1, dann 0,275 g Katalysator 1 und 0,165 g Byk® 310, und zuletzt einer Lösung von 0,825 g CGI 909, 0,028 g Neu Methylenblau, 0,028 g Ethylviolett und 0,028 g Astrazon Orange G in 1,678 g N-Ethylpyrrolidon (zusammen Photoinitiator 1) im Dunkeln versetzt und gemischt, so dass eine klare Lösung erhalten wurde. Anschließend wurden bei 30 °C 10,395 g Komponente A1 zugegeben und erneut gemischt. Die erhaltene, flüssige Masse wurde dann auf Substrat 1 appliziert und 4,5 Minuten bei 80°C getrocknet. Trockenschichtdicke: 45μm. Maximaler Δn: 0,0134 (633 nm); 0,0122 (532 nm).

Photopolymer 2:

6,63 g Komponente B2 wurden schrittweise mit 3,00 g Schreibmonomer 1, 3,00 g Schreibmonomer 2 und 5,00 g Additiv 1, dann 0,020 g Katalysator 1 und 0,060 g Byk® 310, und zuletzt einer Lösung von 0,300 g CGI 909, 0,040 g Neu Methylenblau, 0,020 g Safranin O und 0,020 g Astrazon Orange G in 0,682 g N- Ethylpyrrolidon (zusammen Photoinitiator 2) im Dunkeln versetzt und gemischt, so dass eine klare Lösung erhalten wurde. Anschließend wurden bei 30 °C 1,228 g Komponente A2 zugegeben und erneut gemischt. Die erhaltene, flüssige Masse wurde dann auf Substrat 2 appliziert und 4,5 Minuten bei 80°C getrocknet. Trockenschichtdicke: 15μm. Maximaler Δn: 0,0320 (633 nm); 0,0292 (532 nm).

Photopolymer 3:

6,63 g Komponente B2 wurden schrittweise mit 3,00 g Schreibmonomer 1, 3,00 g Schreibmonomer 2 und 5,00 g Additiv 1, dann 0,020 g Katalysator 1 und 0,060 g Byk® 310, und zuletzt einer Lösung von 0,300 g CGI 909, 0,040 g Neu Methylenblau (umkristallisiert als Dodecylbenzolsulfonat), 0,020 g Safranin O (umkristallisiert als Dodecylbenzolsulfonat) und 0,020 g Astrazon Orange G (umkristallisiert als Dodecylbenzolsulfonat) in 0,682 g N-Ethylpyrrolidon im Dunkeln versetzt und gemischt, so dass eine klare Lösung erhalten wurde. Anschließend wurden bei 30 °C 1,228 g Komponente A2 zugegeben und erneut gemischt. Die erhaltene, flüssige Masse wurde dann auf Substrat 2 appliziert und 4,5 Minuten bei 80°C getrocknet. Trockenschichtdicke: 14μm. Maximaler Δn: 0,0288 (633 nm).

**Ausgangsverbindungen zur Herstellung der Schutzschichten:**

PMMA: Poly(methylmethacrylat), erhältlich von Lucite International Inc., Cordova, TN, USA (Elvacite Grade 2041).

APEC 1800: Produkt der Bayer MaterialScience AG, Leverkusen, DE, Polycarbonattyp, basierend auf Umsetzung von Phosgen mit Bisphenol A und Trimethylcyclohexan-Bisphenol, 20 %-ig gelöst in 1-Methoxy-2-propanolacetat (40%), Trimethylbenzol (20%), Ethyl-3-ethoxypropionat (40%).

Fomrez® UL28: Urethanisierungskatalysator, Dimethylbis[(1-oxoneodecl)oxy]stannan, Handelsprodukt der Momentive Performance Chemicals, Wilton, CT, USA (als 10%ige Lösung in N-Ethylpyrrolidon eingesetzt).

Desmodur® N 3900: Produkt der Bayer MaterialScience AG, Leverkusen, Deutschland" Hexandiisocyanatbasiertes Polyisocyanat, Anteil an Iminooxadiazindion mindestens 30 %, NCO-Gehalt: 23,5 %.

Desmophen® NH 1420: Produkt der Bayer MaterialScience AG, Leverkusen, Deutschland, aminofunktionell, Aminzahl 200.

Desmodur® N 3600: Produkt der Bayer MaterialScience AG, Leverkusen, Deutschland" Hexandiisocyanatbasiertes Trimer, NCO-Gehalt: 22,85 %.

Desmophen® 1800: Produkt der Bayer MaterialScience AG, Leverkusen, Deutschland, Polyesterpolyol auf Basis Adipinsäure, Diethylenglykol und Trimethylolpropan, OH-Zahl 61,2.

Desmodur® L67 MPA/X: Produkt der Bayer MaterialScience AG, Leverkusen, Deutschland, Aromatisches Polyisocyanat auf Basis Toluylendiisocyanat, 67 %ig in Ethylglykolacetat/ Xylol 1:1, NCO-Gehalt: 11,9%.

DBTL: Dibutylzinn-dilaureat, Urethanisierungskatalysator, als Desmorapid® Z Produkt der Bayer MaterialScience AG, Leverkusen, Deutschland.

Desmophen® 670: Produkt der Bayer MaterialScience AG, Leverkusen, Deutschland, schwach verzweigter, hydroxylgruppenhaltiger Polyester auf Basis Adipinsäure, Isophthalsäure, Phthalsäureanhydrid, Adipol und Trimethylolpropan, OH-Zahl 142,0.

Desmodur® N75 MPA: Produkt der Bayer MaterialScience AG, Leverkusen, Deutschland, aliphatisches Polyisocyanat auf Basis Hexamethylendiisocyanat (HDI), 75%ig in 1-Methoxypropylacetat-2, NCO-Gehalt 16,5%.

PolyTHF® 2000: Polytetramethylenglykolpolyol, OH-Zahl 56 mg KOH/g, zahlenmittleres Molekulargewicht 2000

g/mol (BASF SE, Ludwigshafen, Deutschland).

PolyTHF® 1000: Polytetramethylenglykolpolyol, OH-Zahl 112 mg KOH/g, zahlenmittleres Molekulargewicht 1000 g/mol (BASF SE, Ludwigshafen, Deutschland).

Bayhydrol® UV 2720/1 XP: Produkt der Bayer MaterialScience AG, Leverkusen, Deutschland, anionische, wässrige UV-härtbare Polyurethandispersion, Festkörpergehalt ca. 40%.

Bindzil® CC 401: Produkt der Akzo Chemicals GmbH, kolloidale, wässrige Silicadispersion mit mittleren Partikelgrößen von 12 nm (Herstellerangabe).

Bayhydrol® UH XP 2648: Produkt der Bayer MaterialScience AG, Leverkusen, Deutschland, aliphatische, polycarbonathaltige anionische Polyurethandispersion, lösemittelfrei, Festkörpergehalt ca. 35%.

Irgacure® 500: UV-Initiator, Produkt der BASF SE, Basel, Schweiz.

Byk® 346 (silikonbasiertes Oberflächenadditiv der BYK-Chemie GmbH, Wesel, Lösung in Dipropylenglykolmonomethylether (48 %)).

Borchi® Gel 0625: Produkt der OMG Borchers GmbH, Verdicker.

Dispercoll® C VP LS 2372/1: Produkt der Bayer MaterialScience AG, Leverkusen, Deutschland, wässrig-kolloidale Dispersion eines Polymerisates des 2-Chlorobutadien (ca. 58% Feststoffgehalt).

Herstellung Polyurethan-Lösung I:

200 g PolyTHF® 2000 und 50 g PolyTHF® 1000 wurden in einer Standard-Rührapparatur auf 80 °C aufgeheizt. Anschließend wurde bei 80C innerhalb von 5 min ein Gemisch aus 66,72 g Isophorondiisocyanat und 500 g Ethylacetat zugegeben und am Rückfluss so lange gerührt (ca. 8 Stunden), bis der theoretische NCO-Wert erreicht war. Das fertige Prepolymer wurde auf 20 °C abgekühlt und anschließend wurde eine Lösung aus 31,3 g Methylenbis(4-aminocyclohexan) und 500 g Isopropanol innerhalb von 30 min zudosiert. Dann wurde weiter gerührt, bis IR-spektroskopisch keine freien Isocyanatgruppen mehr feststellbar waren. Die erhaltene klare Lösung weist einen Feststoffgehalt von 25 Gewichts-% und eine Viskosität von 4600 mPas (23 °C) auf.

Herstellung Polyurethan-Dispersion II: **(DSB 2895)**

56,9 g Bayhydrol® UV 2720/1 XP, 24,2 g Bindzil® CC 401 und 8,4 g Bayhydrol® UH XP 2648 werden unter Rühren zusammen gegeben. Danach wird eine Lösung von, 0,7 g Irgacure® 500 in 9,0 g (1-Methoxypropanol / 4-Hydroxi-4-methyl pentan-2-on (1:1)) unter starkem Rühren hinzugegeben. Anschließend werden 0,3 g Byk® 346 und 0,5 g Borchi® Gel 0625 unter starkem Rühren eindispergiert. Man lässt ca. 15 min nachrühren.

Herstellung Polyurethan-Dispersion III

48,6 g Bayhydrol® UV XP 2720/1 XP, 10,5 g Bindzil® CC 401 und 7,9 g Bayhydrol® UH XP 2648 wurden unter Rühren zusammen gegeben. Danach wurde eine Lösung von 0,6 g Irgacure® 500, 0,4 g Borchi® Gel 0625 und 0,2 g Byk® 346 in 8,0 g (1-Methoxypropanol / 4-Hydroxi-4-methyl pentan-2-on (1:1)) unter starkem Rühren hinzugegeben. Es wurde ca. 15 min nachgerührt.

Herstellung der Polyacrylat-basierten Dispersionen IV und V:

In einem 3 L Glasreaktor mit geregelter Heizung und Kühlung und Rührmotor wurden unter Stickstoffatmosphäre Wasser mit der entsprechenden Emulgatormenge vorgelegt. Die Lösung wurde anschließend auf 80°C aufgeheizt. Nach Erreichen der Polymerisationstemperatur wurden die Monomermischung M1 und die Initiatorlösung W1 für die Herstellung der internen Saat innerhalb von 30 min. über eine Dosierpumpe zugegeben, danach wurde noch 30 min. nachgerührt. Danach wurden die Monomermischung M2 und die wässrige Lösung W2 innerhalb von 240 min. zudosiert. Direkt nach Beendigung der Dosierungen M2 und W2 wurde die wässrige Lösung W3 zur Nachaktivierung innerhalb von 60 min. zudosiert, die Dispersion wurde noch über einen Zeitraum von 60 min. weiter gerührt und anschließend abgekühlt. Zur pH-Einstellung auf pH 7 wurde die entsprechende Menge ammoniakalischer Lösung (W4) langsam zugetropft und die fertige Dispersion wird über ein 125 μm Filter abgeführt.

| | | Dispersion IV Menge (g) | Dispersion V Menge (g) |
|---|---|---|---|
| **Vorlage** | Emulgator Tanemul 951 (21,5%) | 15,5 | 24,5 |
| | E- Wasser | 800 | 570 |

(fortgesetzt)

| | | Dispersion IV Menge (g) | Dispersion V Menge (g) |
|---|---|---|---|
| **M1** | Methylmethacrylat | 35,3 | |
| | Butylacrylat | 25,3 | |
| | Styrol | | 60 |
| **W1** | Ammoniumpersulfat | 0,5 | 0,5 |
| | E- Wasser | 70 | 70 |
| **M2** | Methylmethacrylat | 35,2 | |
| | Butylacrylat | 25,4 | |
| | Hydroxyethylmethacrylat | 42,9 | |
| | Styrol | 330 | 595 |
| | Ethylhexylacrylat | 252,3 | 225 |
| | 2-(Perflourhexyl)ethylmethacrylat | | 9,3 |
| | Acrylsäure | 4,1 | 29 |
| **W2** | Ammoniumpersulfat | 3,5 | 3,6 |
| | Emulgator Tanemul 951 | 15,1 | 24 |
| | E- Wasser | 500 | 500 |
| **W3** | Ammoniumpersulfat | 0,65 | 0,65 |
| | E- Wasser | 70 | 70 |
| **W4** | Ammoniak (33% ig) | 3,3 | 11,5 |
| | E-Wasser | 19 | 17 |
| Feststoffgehalt / % | | 35 | 42,3 |
| Viskosität / mPas | | 10,5 | 30,4 |

**Herstellung der Medien**

Aus oben beschriebenem Photopolymerfilmen 1 und 2 wurden im Dunkeln DIN A4 große Blätter geschnitten. Diese wurden mit verschiedenen Schutzlacken mit Hilfe eines Zehntner Applikationsgerätes (automatischen Filmziehgeräts) mit einem Rakelabstand für eine Trockenzielschichtdicke von 5-10 $\mu$m beschichtet.

Vergleichsbeispiel 1:

PMMA (Mn ca. 100000 g/mol) wurde mittels des automatischen Filmziehgeräts aus organischer Lösung (10%-ige Lösung in Butylacetat, Toluol, Butanon oder Cyclohexanon) im Dunkeln auf den Photopolymerfilm 1 appliziert. Bei der Applikation fiel bereits auf, dass Teile der Photopolymerlösung ausgewaschen wurden (farbig). Durch physikalische Trocknung (2 h @ 60°C) wurde ein Aushärten des PMMA-Filmes erreicht, allerdings wurde der Film brüchig und spröde (kleine Risse in der Oberfläche). Der Film war für das Schreiben von Hologrammen nicht mehr verwendbar.

**Beispiel 1:**

Es wurde ein 2K-PU-System verwendet. Dabei wurden 9,1 g Desmophen® NH 1420 in einen Speedmixbecher eingewogen und 5,894 g Desmodur® N 3900 sowie 0,060 g Fomrez® UL 28 zugegeben und kurz gemischt. Die erhaltene flüssige Masse wurde dann auf den Photopolymerfilm 1 mittels des automatischen Filmziehgeräts im Dunkeln appliziert. Die Härtung erfolgte für 2 Stunden bei 60 °C im Trockenschrank und anschließend bei RT über Nacht. Maximales $\Delta$n: 0,0059 (532 nm).

**Beispiel 2:**

Es wurde ein 2K-PU-System verwendet. Dabei wurden 8,969 g Desmophen® NH 1420 in einen Speedmixbecher eingewogen und 6,025 g Desmodur® N 3600 sowie 0,060 g Fomrez® UL 28 zugegeben und kurz gemischt. Die erhaltene flüssige Masse wurde dann auf den Photopolymerfilm 1 mittels des automatischen Filmziehgeräts im Dunkeln appliziert. Die Härtung erfolgte für 2 Stunden bei 60°C im Trockenschrank und anschließend bei RT über Nacht. Maximales $\Delta$n: 0,0051 (633 nm).

**Beispiel 3:**

Es wurde ein 2K-PU-System verwendet. Dabei wurden 10,768 g Desmophen® 1800 in einen Speedmixbecher eingewogen und 4,229 g Desmodur® L67 MPA sowie 0,003 g DBTL zugegeben und kurz gemischt. Die erhaltene flüssige Masse wurde dann auf den Photopolymerfilm 1 mittels des automatischen Filmziehgeräts im Dunkeln appliziert. Die Härtung erfolgte für 2 Stunden bei 60°C im Trockenschrank und anschließend bei RT über Nacht. Maximales$\Delta$n: 0,0060 (633 nm).

**Beispiel 4:**

Es wurde ein lösemittel-basiertes 2K-PU-System verwendet. Dabei wurden 8,96 g Desmophen® 670 in einen Speedmixbecher eingewogen und 0,149 g Byk 310, 5,88 g Desmodur® N 75 MPA (enthält 25% 1-Methoxypropylacetat-2) sowie 0,003 g DBTL zugegeben und kurz gemischt. Die erhaltene flüssige Masse wurde dann auf den Photopolymerfilm 1 mittels des automatischen Filmziehgeräts im Dunkeln appliziert. Die Härtung erfolgte für 2 Stunden bei 60°C im Trockenschrank und anschließend bei RT über Nacht. Maximales $\Delta$n: 0,0082 (633 nm).

**Beispiel 5:**

Es wurde ein lösemittel-basiertes 1K-PU-System verwendet. Dabei wurde die Polyurethanlösung I über ein automatisches Filmziehgerät auf den Photopolymerfilm 1 im Dunkeln appliziert. Die Trocknung erfolgte für 2 Stunden bei 60°C im Trockenschrank und anschließend bei RT über Nacht.Maximales $\Delta$n: 0,0105 (633 nm); 0,0110 (532 nm).

**Beispiel 6:**

Es wurde ein wasser-basiertes 1K-PU-System verwendet. Dabei wurde die PolyurethanDispersion II über ein automatisches Filmziehgerät auf den Photopolymerfilm 1 im Dunkeln appliziert. Die Trocknung erfolgte für 2 Stunden bei 60°C im Trockenschrank und anschließend bei RT über Nacht.. Maximales $\Delta$n: 0,0122 (633 nm).

**Beispiel 7:**

Es wurde ein 2K-PU-System verwendet. Dabei wurden 8,88 g Desmophen® NH 1420 und 0,149 g Byk® 310 in einen Speedmixbecher eingewogen und 5,965 g Desmodur® N 3600 sowie 0,059 g Fomrez® UL 28 zugegeben und kurz gemischt. Die erhaltene flüssige Masse wurde dann auf den Photopolymerfilm 2 mittels des automatischen Filmziehgeräts im Dunkeln appliziert. Die Härtung erfolgte für 2 Stunden bei 60 °C im Trockenschrank und anschließend bei RT über Nacht. Maximales $\Delta$n: 0,0150 (532 nm; Messung mit Wasser als Immersionsmittel).

**Beispiel 8:**

Es wurde ein 2K-PU-System verwendet. Dabei wurden 11,571 g Desmophen® 1800 und 0,149 g Byk® 310 in einen Speedmixbecher eingewogen und 3,277 g Desmodur® N75 MPA sowie 0,003 g DBTL zugegeben und kurz gemischt. Die erhaltene flüssige Masse wurde dann auf den Photopolymerfilm 2 mittels des automatischen Filmziehgeräts im Dunkeln appliziert. Die Härtung erfolgte für 2 Stunden bei 60 °C im Trockenschrank und anschließend bei RT über Nacht. Maximales $\Delta$n: 0,0064 (633 nm); 0,0075 (532 nm).

**Beispiel 9:**

Es wurde ein lösemittel-basiertes 1K-PU-System verwendet. Dabei wurde die Polyurethanlösung I über ein automatisches Filmziehgerät auf den Photopolymerfilm 2 im Dunkeln appliziert. Die Trocknung erfolgte für 2 Stunden bei 60 °C im Trockenschrank und anschließend bei RT über Nacht. Maximales $\Delta$n: 0,0230 (532 nm).

**Beispiel 10:**

Es wurde ein wasser-basiertes 1K-PU-System verwendet. Dabei wurde die PolyurethanDispersion II über ein automatisches Filmziehgerät auf den Photopolymerfilm 2 im Dunkeln appliziert. Die Trocknung erfolgte für 2 Stunden bei 60 °C im Trockenschrank und anschließend bei RT über Nacht.. Maximales Δn: 0,0285 (633 nm); 0,0220 (532 nm).

**Beispiel 11**

Es wurde ein wasser-basiertes Polyacrylatsystem verwendet. Dabei wurde die Dispersion V über ein automatisches Filmziehgerät auf den Photopolymerfilm 2 im Dunkeln appliziert. Die Trocknung erfolgte für 2 Stunden bei 60 °C im Trockenschrank und anschließend bei RT über Nacht. Maximales Δn (für die Messung wurde Wasser als Immersionsmittel verwendet): 0,0234 (633 nm).

**Beispiel 12:**

Es wurde ein wasser-basiertes Polyacrylatsystem verwendet. Dabei wurde die Dispersion IV zunächst mit 0,30 Gew.-% Byk® 380N (nicht-ionogenes Oberflächenadditiv auf Basis einer Acrylatpolymerlösung der BYK-Chemie GmbH, Wesel, 52%ige Lösung in Dipropylenglykolmonomethylether) und 0,20 Gew.-% Borchigel ALA (Verdickungsmittel, Produkt der OMG Borchers GmbH, Langenfeld (Rheinland), Deutschland) additiviert und anschließend über ein automatisches Filmziehgerät auf Photopolymer 3 im Dunkeln appliziert. Die Trocknung erfolgte für 2 Stunden bei 60 °C im Trockenschrank und anschließend bei RT über Nacht. Maximales Δn: 0,0237 (633 nm).

**Beispiel 13:**

Es wurde ein wasser-basiertes 1K-PU-System verwendet. Dabei wurde die Formulierung Bayhydrol XP 2606 (leicht verzweigte, nicht-funktionelle Polyurethandispersion auf Basis 39 % Desmophen® C 1200, 12,7 % Desmodur® W und 29% Desmodur® I in Wasser, 36,4%-ig) über ein automatisches Filmziehgerät auf den Photopolymerfilm 2 im Dunkeln appliziert. Die Trocknung erfolgte für 2 Stunden bei 60 °C im Trockenschrank und anschließend bei RT über Nacht. Maximales Δn: 0,0175 (633 nm); 0,0244 (532 nm).

**Beispiel 14:**

Es wurde ein wasser-basiertes 1K-PU-System verwendet. Dabei wurde eine physikalische Mischung aus 80 Gew.-% Formulierung Bayhydrol® XP 2558 (lineare, nicht-funktionelle Polyurethandispersion auf Basis 37,5 % Baycoll® XP 2401 (difunktioneller Polyester auf Basis Adipinsäure/ Hexandiol-1,6, Mn = 2400 g/mol) und 41,4 % Desmodur® I in Wasser, 37,5%-ig) und 20 Gew.-% Formulierung Bayhydrol® R2753 über ein automatisches Filmziehgerät auf den Photopolymerfilm 2 im Dunkeln appliziert. Die Trocknung erfolgte für 2 Stunden bei 60 °C im Trockenschrank und anschließend bei RT über Nacht. Maximales Δn: 0,0200 (633 nm); 0,0220 (532 nm).

**Beispiel 15:**

Es wurde ein wasser-basiertes 1K-PU-System verwendet. Dabei wurde die PolyurethanDispersion III über ein automatisches Filmziehgerät auf den Photopolymerfilm 2 im Dunkeln appliziert. Die Trocknung erfolgte für 2 Stunden bei 60 °C im Trockenschrank und anschließend bei RT über Nacht.. Maximales Δn: 0,0160 (633 nm).

**Beispiel 16:**

Es wurde ein wasser-basiertes 1K-PU-System verwendet. Dabei wurde die Formulierung Bayhydrol UV XP 2690 (lineare, ethlyenisch ungesättigte Polyurethandispersion auf Basis 51,9% Polyesteracrylat WDJ 478 und 39,6 % Desmodur® W in Wasser, ca. 40%-ig) über ein automatisches Filmziehgerät auf den Photopolymerfilm 2 im Dunkeln appliziert. Die Trocknung erfolgte für 2 Stunden bei 60 °C im Trockenschrank und anschließend bei RT über Nacht. Maximales Δn: 0,0186 (532 nm).

**Beispiel 17:**

Es wurde eine wässrig-kolloidale Dispersion von Poly-(2-Chlorobutadien) (58%-ig) verwendet. Dabei wurde die Formulierung Dispercoll® C VP LS 2372/1 (Produkt der der Bayer MaterialScience AG, Leverkusen, DE) über ein automatisches Filmziehgerät auf den Photopolymerfilm 2 im Dunkeln appliziert. Die Trocknung erfolgte für 2 Stunden

bei 60 °C im Trockenschrank und anschließend bei RT über Nacht. Maximales $\Delta n$: 0,0231 (633 nm); 0,0287 (532 nm).

**Belichtung und Prüfung der Medien**

Hologramme wurden wie oben beschrieben in Denisyuksanordnung mit Laserwellenlängen von 532 nm und 633 nm in Medien aus Photopolymer 2, Beispiel 10 und Beispiel 12 belichtet. Anschließend wurden die erhaltenen Hologramme unter UV-Licht einem Bleichschritt unterzogen. Dazu werden die auf eine Glasplatte laminierten Hologramme mit der Glasseite nach oben auf das Förderband einer UV-Anlage gelegt und mit einer Bandgeschwindigkeit von 2,5 m/min zweimal unter einer Lampe des Typs Fusion UV 558434 KR 85 von Fusion UV Systems GmbH, Ismaning, Deutschland mit einer nominalen Leistungsdichte von 80 $W/cm^2$ mit einer Energiedichte auf dem Photopolymer von ca. 2 $J/cm^2$ belichtet.

Als Klebstoffe wurden die in den unten stehenden Tabellen aufgeführten Klebebänder und Klebstoffe eingesetzt, die alle mit Photopolymer 2 eine deutliche Farbveränderung des Hologrammes bewirken, die bereits mit bloßem Auge zu sehen ist. Bei Verklebung mit den Klebebändern tritt bei monochromatischen Hologrammen eine Blauverschiebung (hypsochromer Effekt), beim Verkleben mit der genannten Flüssigklebstoff ein starkes Quellen resultierend in einer Rotverschiebung (batochromer Effekt) des verklebten Hologrammes auf. Vergleichbare Effekte sind bei keinem Hologramm zu beobachten, das mit einem Medium gemäß der Beispiele 10 und 12 hergestellt wurde.

Folgende Klebebänder wurden geprüft:

| Klebeband | Bestandteile / Basis |
|---|---|
| Aslan C 114 von ASLAN, Schwarz GmbH & Co. KG, Overath, Deutschland | Acrylatbasiertes Haftklebeband |
| MACal 9800 von MACtac Europe, Soignies, Belgien | Acrylatbasiertes Haftklebeband |
| Scotchcal® F 400 von 3M Deutschland GmbH, Neuss | Haftklebeband auf Basis modifizierter Acrylate |

Die Klebebänder wurden von Hand bzw. über einen Rollenlaminator durch Druckverklebung mit dem Photopolymer verklebt. Dann wurden die Proben 7 Tage bei Raumtemperatur und weitere 3 Tage bei 60 °C gelagert und anschließend die Hologramme mit dem Auge betrachtet. Eine Änderung der Farbe des Hologramms trat nicht auf.

Zusätzlich wurde ein Versuch mit einem Flüssigklebstoff durchgeführt:

| Klebstoff | Bestandteile / Basis |
|---|---|
| Desmolux® U 100, Desmolux® LS 2396, 20% Tetrahydrofurylacrylat | UV-System auf PU-Basis mit Urethanacrylaten als strahlenhärtende Komponente und Reaktivverdünner |

Die wie oben beschrieben hergestellten Denisyuk-Hologramme wurden auf dem Photopolymerfilm mit dem Klebstoff beschichtet und die Mischung unter einer Lampe des Typs Fusion UV 558434 KR 85 von Fusion UV Systems GmbH, Ismaning, Deutschland mit einer nominalen Leistungsdichte von 80 $W/cm^2$ mit einer Energiedichte auf dem Photopolymer von ca. 2 $J/cm^2$ ausgehärtet. Klebebänder 2 bis 4 wurden von Hand bzw. über einen Rollenlaminator durch Druckverklebung mit dem Photopolymer verklebt. Dann wurden die Proben 7 Tage bei RT und weitere 3 Tage bei 60°C gelagert und anschließend die Hologramme mit dem Auge betrachtet. Eine Änderung der Farbe des Hologramms trat nicht auf.

**Patentansprüche**

1. Holografisches Medium umfassend eine Schutzschicht und einen mit der Schutzschicht verbundenen Photopolymerfilm, der Polyurethan-Matrixpolymere, Acrylat-Schreibmonomere und Photoinitiatoren enthält, **dadurch gekennzeichnet, dass** die Schutzschicht Polyurethanpolymere und/oder Polychloropren enthält oder daraus besteht, die Schutzschicht für die Bestandteile des Photopolymerfilms undurchlässig, optisch klar und für elektromagnetische Strahlung mit einer Wellenlänge im Bereich von 350 bis 800 nm transparent ausgebildet ist, die Schutzschicht hochmolekulare, unvernetzt Polymere oder dreidimensionale Netzwerkstrukturen hoher Netzwerkdichte enthält oder daraus besteht, wobei die hochmolekularen, unvernetzten Polymere eine mittlere Molmasse von > 7500 g/mol aufweisen und wobei die dreidimensionale Netzwerkstrukturen hoher Netzwerkdichte erhältlich sind, indem Komponenten umgesetzt werden, die zahlenmittlere Äquivalentmolmassen von < 1500 g/mol aufweisen.

2. Holografisches Medium nach Anspruch 1, **dadurch gekennzeichnet, dass** die Schutzschicht wenigstens eine Oberfläche des Photopolymerfilms vollständig bedeckt.

3. Holografisches Medium nach einem der Ansprüche 1 oder 2, **dadurch gekennzeichnet, dass** die Schutzschicht eine Dicke von 1 bis 40 μm, bevorzugt von 3 bis 25 μm und ganz besonders bevorzugt von 5 bis 20 μm aufweist.

4. Holografisches Medium nach Anspruch 1, **dadurch gekennzeichnet, dass** die hochmolekularen, unvernetzten Polymere eine mittlere Molmasse von > 7500 g/mol, und bevorzugt von > 10000 g/mol aufweisen.

5. Holografisches Medium nach Anspruch 1, **dadurch gekennzeichnet, dass** die dreidimensionale Netzwerkstrukturen hoher Netzwerkdichte erhältlich sind, indem Komponenten umgesetzt werden, die zahlenmittlere Äquivalentmolmassen von < 1500 g/mol und besonders bevorzugt von < 1200 g/mol aufweisen.

6. Holografisches Medium nach einem der Ansprüche 1 bis 5, **dadurch gekennzeichnet, dass** die Schutzschicht erhältlich ist, indem eine wässrige oder lösungsmittelarme Polymerformulierung auf den Photopolymerfilm aufgebracht wird

7. Holografisches Medium nach einem der Ansprüche 1 bis 6, **dadurch gekennzeichnet, dass** die Photoinitiatoren einen anionischen, kationischen oder neutralen Farbstoff und einen Coinitiator umfassen.

8. Holografisches Medium nach einem der Ansprüche 1 bis 7, **dadurch gekennzeichnet, dass** ein Hologramm in den Photopolymerfilm einbelichtet ist.

9. Verwendung eines holografisches Mediums nach einem der Ansprüche 1 bis 7 zur Herstellung von Hologrammen, insbesondere zur Herstellung von In-Line Hologrammen, Off-Axis Hologrammen, Full-Aperture Transfer Hologrammen, Weißlicht-Transmissionshologrammen, Denisyukhologrammen, Off-Axis Reflektionshologrammen, Edge-Lit Hologrammen sowie holographischen Stereogrammen.

10. Verfahren zur Herstellung eines holografischen Mediums nach einem der Ansprüche 1 bis 7, **dadurch gekennzeichnet, dass** ein Photopolymerfilm aus einer Formulierung enthaltend Polyisocyanate, Polyole, Acrylat-Schreibmonomere und Photoinitiatoren hergestellt und auf den Photopolymerfilm eine Schutzschicht aufgebracht wird, **dadurch gekennzeichnet, dass** die Schutzschicht für die Bestandteile des Photopolymerfilms undurchlässig, optisch klar und für elektromagnetische Strahlung mit einer Wellenlänge im Bereich von 350 bis 800 nm transparent ausgebildet ist.

## Claims

1. Holographic medium comprising a protective layer and a photopolymer film which is bonded to the protective layer and contains polyurethane matrix polymers, acrylate writing monomers and photoinitiators, **characterised in that** the protective layer comprises or consists of polyurethane polymers and/or polychloroprene, the protective layer is impermeable to the constituents of the photopolymer film, is optically clear and is transparent to electromagnetic radiation having a wavelength in the range of from 350 to 800 nm, the protective layer comprises or consists of high molecular weight, uncrosslinked polymers or three-dimensional network structures of high network density, wherein the high molecular weight, uncrosslinked polymers have a mean molar mass of > 7500 g/mol and wherein the three-dimensional network structures of high network density are obtainable by reacting components that have number-average equivalent molar masses of < 1500 g/mol.

2. Holographic medium according to claim 1, **characterised in that** the protective layer covers at least one surface of the photopolymer film completely.

3. Holographic medium according to either claim 1 or claim 2, **characterised in that** the protective layer has a thickness of from 1 to 40 μm, preferably from 3 to 25 μm and most particularly preferably from 5 to 20 μm.

4. Holographic medium according to claim 1, **characterised in that** the high molecular weight, uncrosslinked polymers have a mean molar mass of > 7500 g/mol and preferably of > 10,000 g/mol.

5. Holographic medium according to claim 1, **characterised in that** the three-dimensional network structures of high network density are obtainable by reacting components that have number-average equivalent molar masses of < 1500 g/mol and particularly preferably of < 1200 g/mol.

6. Holographic medium according to any one of claims 1 to 5, **characterised in that** the protective layer is obtainable by applying an aqueous or low-solvent polymer formulation to the photopolymer film.

7. Holographic medium according to any one of claims 1 to 6, **characterised in that** the photoinitiators comprise an anionic, cationic or neutral dye and a coinitiator.

8. Holographic medium according to any one of claims 1 to 7, **characterised in that** a hologram is exposed into the photopolymer film.

9. Use of a holographic medium according to any one of claims 1 to 7 in the production of holograms, in particular in the production of in-line holograms, off-axis holograms, full-aperture transfer holograms, white light transmission holograms, Denisyuk holograms, off-axis reflection holograms, edge-lit holograms as well as holographic stereograms.

10. Process for the production of a holographic medium according to any one of claims 1 to 7, **characterised in that** a photopolymer film is prepared from a formulation comprising polyisocyanates, polyols, acrylate writing monomers and photoinitiators and a protective layer is applied to the photopolymer film, **characterised in that** the protective layer is impermeable to the constituents of the photopolymer film, is optically clear and is transparent to electromagnetic radiation having a wavelength in the range of from 350 to 800 nm.

## Revendications

1. Support holographique comprenant une couche de protection et un film photopolymère relié avec la couche de protection, qui contient des polymères de matrice de polyuréthane, des monomères d'écriture d'acrylate et des photoinitiateurs, **caractérisé en ce que** la couche de protection contient des polymères de polyuréthane et/ou du polychloroprène ou en est constituée, la couche de protection est configurée imperméable aux constituants du film photopolymère, optiquement claire et transparente au rayonnement électromagnétique ayant une longueur d'onde dans la plage allant de 350 à 800 nm, la couche de protection contient des polymères non réticulés de poids moléculaire élevé ou des structures de réseau tridimensionnelles de densité de réseau élevée, ou en est constituée, les polymères non réticulés de poids moléculaire élevé présentant une masse molaire moyenne > 7 500 g/mol et les structures de réseau tridimensionnelles de densité de réseau élevée pouvant être obtenues par mise en réaction de composants qui présentent des masses molaires équivalentes moyennes en nombre < 1 500 g/mol.

2. Support holographique selon la revendication 1, **caractérisé en ce que** la couche de protection recouvre en totalité au moins une surface du film photopolymère.

3. Support holographique selon l'une quelconque des revendications 1 ou 2, **caractérisé en ce que** la couche de protection présente une épaisseur de 1 à 40 $\mu$m, de préférence de 3 à 25 $\mu$m et de manière tout particulièrement préférée de 5 à 20 $\mu$m.

4. Support holographique selon la revendication 1, **caractérisé en ce que** les polymères non réticulés de poids moléculaire élevé présentent une masse molaire moyenne > 7 500 g/mol, et de préférence > 10 000 g/mol.

5. Support holographique selon la revendication 1, **caractérisé en ce que** les structures de réseau tridimensionnelles de densité de réseau élevée peuvent être obtenues par mise en réaction de composants qui présentent des masses molaires équivalentes moyennes en nombre < 1 500 g/mol et de manière particulièrement préférée < 1 200 g/mol.

6. Support holographique selon l'une quelconque des revendications 1 à 5, **caractérisé en ce que** la couche de protection peut être obtenue par application d'une formulation polymère aqueuse ou pauvre en solvant sur le film photopolymère.

7. Support holographique selon l'une quelconque des revendications 1 à 6, **caractérisé en ce que** les photoinitiateurs comprennent un colorant anionique, cationique ou neutre et un co-initiateur.

8. Support holographique selon l'une quelconque des revendications 1 à 7, **caractérisé en ce qu'**un hologramme est exposé dans le film photopolymère.

9. Utilisation d' un support holographique selon l'une quelconque des revendications 1 à 7 pour la fabrication d'hologrammes, notamment pour la fabrication d'hologrammes en ligne, d'hologrammes désaxés, d'hologrammes de transfert à ouverture totale, d'hologrammes en transmission en lumière blanche, d'hologrammes de Denisyuk, d'hologrammes désaxés en réflexion, d'hologrammes à bords éclairés, ainsi que de stéréogrammes holographiques.

10. Procédé de fabrication d'un support holographique selon l'une quelconque des revendications 1 à 7, **caractérisé en ce qu'**un film photopolymère est fabriqué à partir d'une formulation contenant des polyisocyanates, des polyols, des monomères d'écriture d'acrylate et des photoinitiateurs, et une couche de protection est appliquée sur le film photopolymère, **caractérisé en ce que** la couche de protection est configurée imperméable aux constituants du film photopolymère, optiquement claire et transparente au rayonnement électromagnétique ayant une longueur d'onde dans la plage allant de 350 à 800 nm.

**Figur 1:**

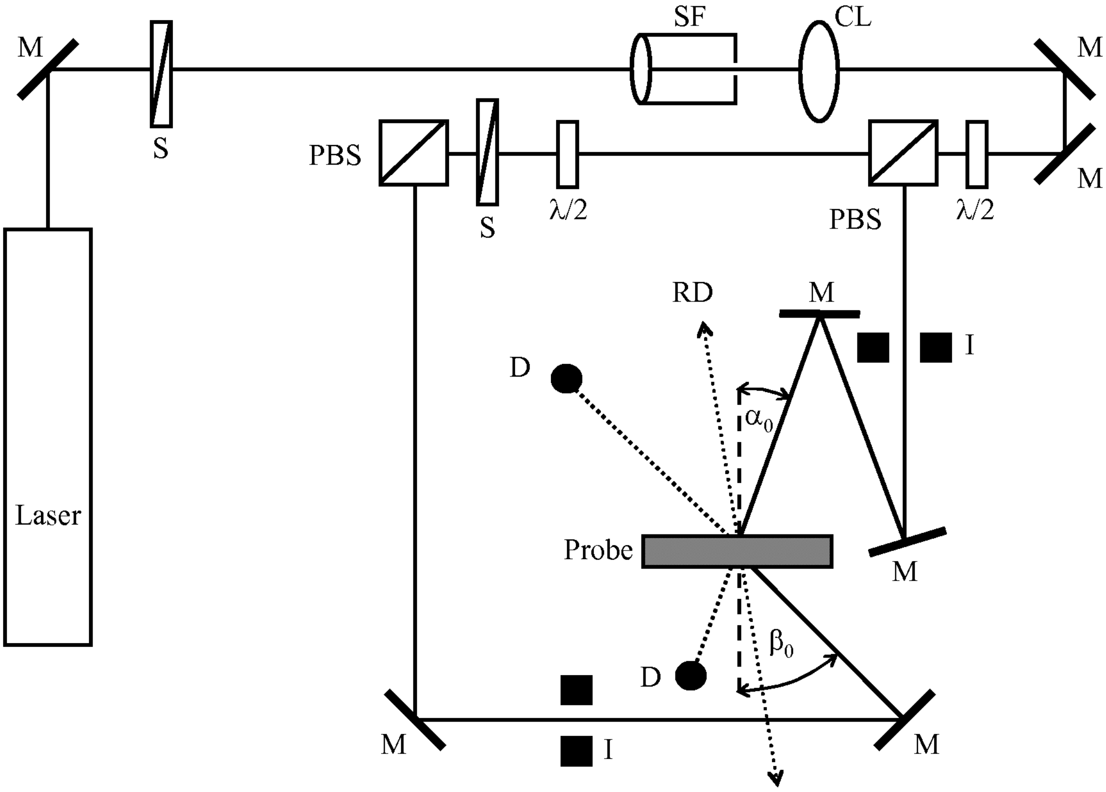


**<u>Figur 1:</u>**

Figur 1 zeigt die Geometrie eines Holografic Media Testers (HMT) bei $\lambda = 633$ nm (He-Ne Laser): M = Spiegel, S = Verschluss, SF = Raumfilter, CL = Kollimatorlinse, $\lambda/2 = \lambda/2$ Platte, PBS = polarisationsempfindlicher Strahlteiler, D = Detektor, I = Irisblende, $\alpha_0 = -21.8°$, $\beta_0 = 41.8°$ sind die Einfallswinkel der kohärenten Strahlen außerhalb der Probe (des Mediums) gemessen. RD = Referenzrichtung des Drehtisches.

Figur 2:

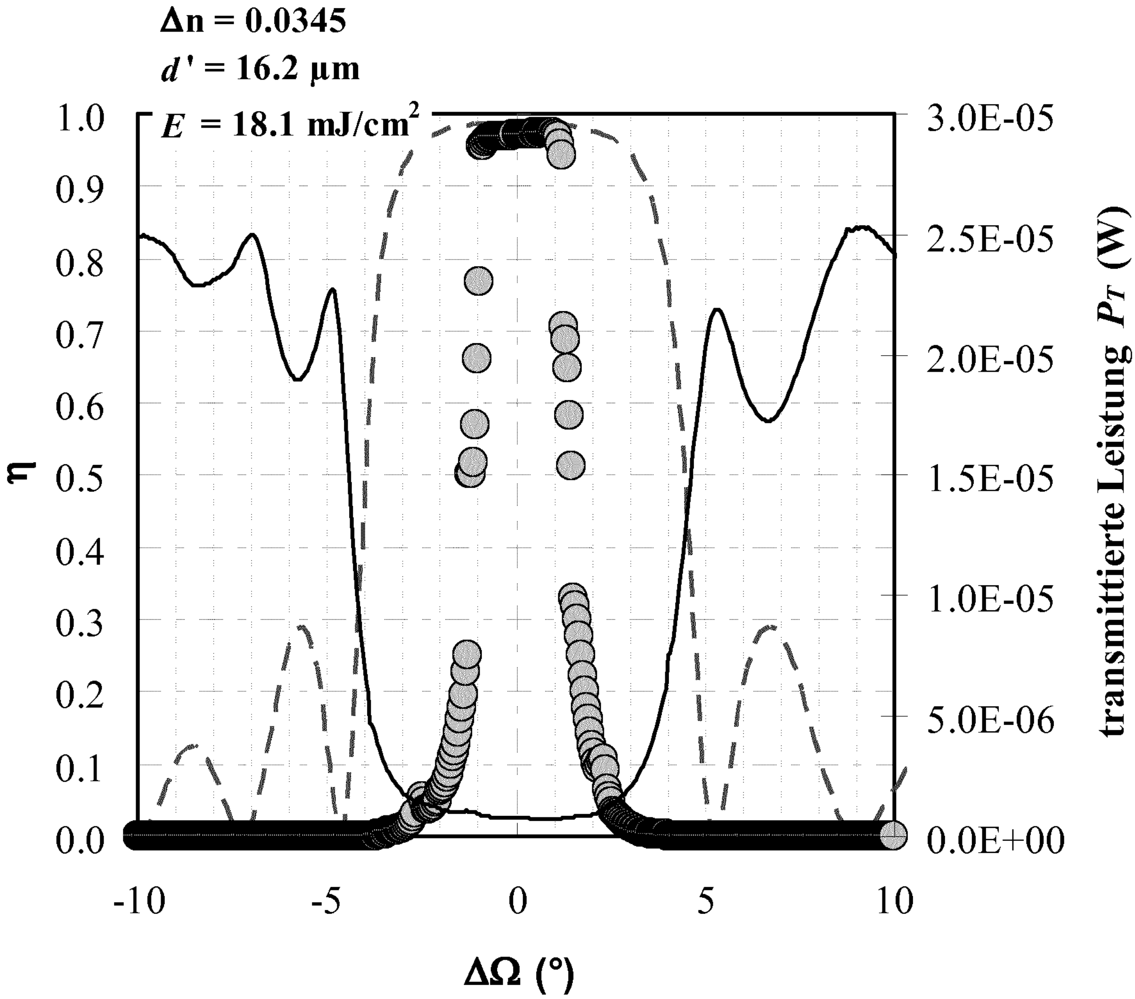


Figur 2 zeigt die gemessene transmittierte Leistung $P_T$ (rechte $y$-Achse) als durchgezogene Linie gegen das Winkeldetuning ΔΩ aufgetragen, die gemessene Beugungseffizienz η (linke $y$-Achse) als ausgefüllte Kreise gegen das Winkeldetuning ΔΩ aufgetragen (soweit die endliche Größe des Detektors es erlaubte) und die Anpassung der Kogelnik Theorie als gestrichelte Linie (linke $y$-Achse).

**Figur 3:**

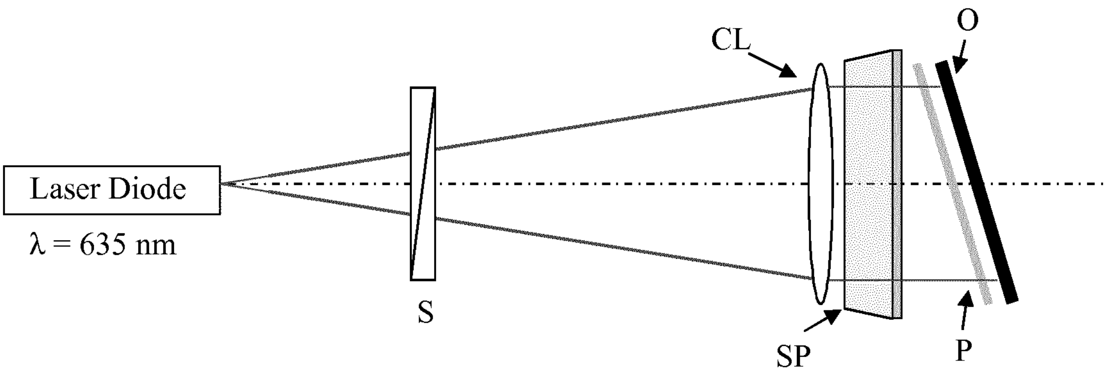


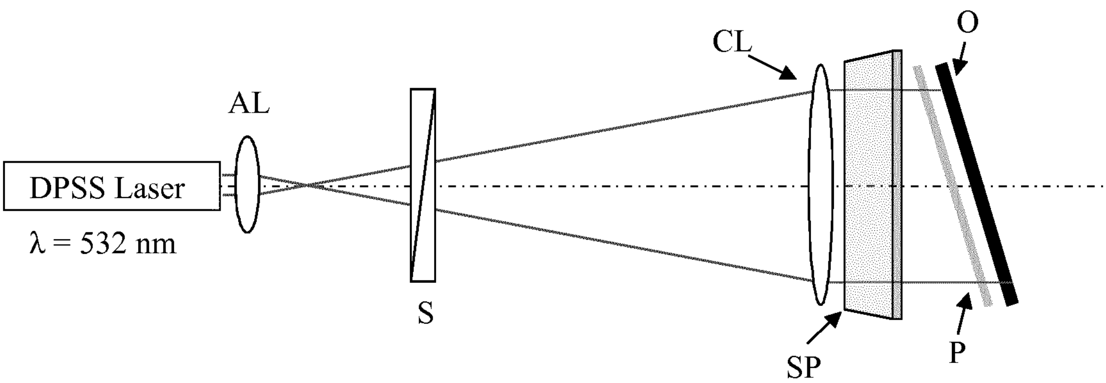


Figur 3 zeigt die Messanordnung zur Prüfung der holographischen Eigenschaften für Wellenlängen von 635 und 532 nm.

**Figur 4:**

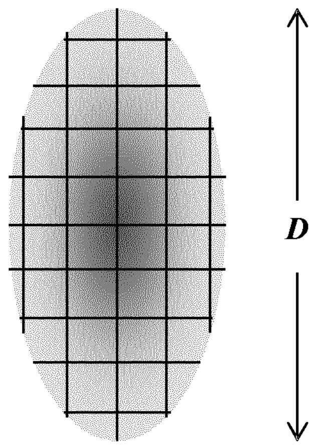


Figur 4 zeigt die elliptische Form eines unter Figur 3 geschriebenen Hologramms.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2218743 A
- EP 2372454 A
- WO 2011054791 A
- WO 2011067057 A
- US 2003148192 A1
- CN 101320208
- EP 2218743 A1
- DE 2446440 A
- WO 0188006 A
- EP 0916647 A
- WO 0039181 A
- WO 0224825 A
- DE 3002734 A
- WO 2005035683 A1
- US 5773544 A
- DE 3044811 A
- DE 2306610 A
- DE 2156453 A


### In der Beschreibung aufgeführte Nicht-Patentliteratur


- Ullmanns Encyclopädie der technischen Chemie. Verlag Chemie, vol. 19, 31-38
- **HOUBEN-WEYL.** Methoden der Organischen Chemie. Georg Thieme Verlag, 1961, vol. XIV/1, 738 f
- **H. KOGELNIK.** *The Bell System Technical Journal,* November 1969, vol. 48 (9), 2909-2947